# EUROPEAN PATENT SPECIFICATION

(11) **EP 2 595 228 B1**
(45) Date of publication and mention of the grant of the patent: **06.08.2014**
(21) Application number: 11848216.5
(22) Date of filing: 08.12.2011
(51) Int. Cl.: H01M 8/04, H01M 8/06, H01M 8/10, H01M 8/12, H01M 8/24

(54) **POWER GENERATION SYSTEM AND METHOD OF OPERATING THE SAME**
STROMERZEUGUNGSSYSTEM UND BETRIEBSVERFAHREN DAFÜR
SYSTÈME DE GÉNÉRATION D'ÉLECTRICITÉ ET SON PROCÉDÉ DE FONCTIONNEMENT

(30) Priority: 13.12.2010 JP 2010276951
(43) Date of publication of application: 22.05.2013
(73) Proprietor: Panasonic Corporation, Osaka 571-8501 (JP)
(72) Inventor: MORITA, Junji, 2-1-61 Shiromi, Chuo-ku Osaka 540-6207 (JP); TATSUI, Hiroshi, 2-1-61 Shiromi, Chuo-ku Osaka 540-6207 (JP); YASUDA, Shigeki, 2-1-61 Shiromi, Chuo-ku Osaka 540-6207 (JP); YUKIMASA, Akinori, 2-1-61 Shiromi, Chuo-ku Osaka 540-6207 (JP); INOUE, Atsutaka, 2-1-61 Shiromi, Chuo-ku Osaka 540-6207 (JP)
(74) Representative: Grünecker, Kinkeldey, Stockmair & Schwanhäusser
(86) International application number: PCT/JP2011/006867
(87) International publication number: WO 2012/081205

(56) References cited:
- JP-A- 2006 073 446
- JP-A- 2007 095 542
- JP-A- 2008 135 267
- JP-A- 2008 159 460
- JP-A- 2008 210 631
- JP-A- 2009 021 047

## Description

### Technical Field

The present invention relates to a power generation system configured to supply heat and electricity and a method of operating the power generation system, and particularly to the configuration of the power generation system.

### Background Art

A cogeneration system supplies generated electric power to users for electric power loads and recovers and stores exhaust heat for hot water supply loads of the users, the exhaust heat being generated by the electric power generation. Known as this type of cogeneration system is a cogeneration system configured such that a fuel cell and a water heater operate by the same fuel (see PTL 1, for example). A cogeneration system disclosed in PTL 1 includes: a fuel cell; a heat exchanger configured to recover heat generated by the operation of the fuel cell; a hot water tank configured to store water having flowed through the heat exchanger to be heated; and a water heater configured to heat the water flowing out from the hot water tank up to a predetermined temperature, and is configured such that the fuel cell and the water heater operate by the same fuel.

Moreover, a fuel cell power generation apparatus provided inside a building is known, which is configured for the purpose of improving an exhaust performance of the fuel cell power generation apparatus (see PTL 2, for example). A power generation apparatus disclosed in PTL 2 is a fuel cell power generation apparatus provided and used in a building including an intake port and includes an air introducing port through which air in the building is introduced to the inside of the fuel cell power generation apparatus, an air discharging pipe through which the air in the fuel cell power generation apparatus is discharged to the outside of the building, and a ventilation unit. The ventilation unit introduces the air from the outside of the building through the intake port to the inside of the building, further introduces the air through the air introducing port to the inside of the fuel cell power generation apparatus, and discharges the air through the air discharging pipe to the outside of the building.

Further, a power generation apparatus including a duct extending in a vertical direction is known, which is configured for the purpose of improving the exhaust performance of an exhaust gas generated by a fuel cell provided inside a building (see PTL 3, for example). In a power generation apparatus disclosed in PTL 3, a duct extending inside a building in a vertical direction and having an upper end portion located outside the building is a double pipe, and a ventilating pipe and an exhaust pipe are coupled to the duct such that an exhaust gas or air flows through the inside or outside of the duct.

### Citation List

### Patent Literature

PTL 1: Japanese Laid-Open Patent Application Publication No. 2007-248009
PTL 2: Japanese Laid-Open Patent Application Publication No. 2006-73446
PTL 3: Japanese Laid-Open Patent Application Publication No. 2008-210631

### Summary of Invention

### Technical Problem

Here, in the case of providing the cogeneration system disclosed in PTL 1 in a building, the below-described configuration may be adopted in reference to the power generation apparatus disclosed in PTL 2 or 3. To be specific, the configuration is that: a cogeneration unit including a fuel cell and a hot water supply unit including a water heater are separately provided; and an exhaust passage causing the cogeneration unit and the water heater to communicate with each other is formed.

In this configuration, for example, in a case where the water heater is activated and the fuel cell is not activated, the exhaust gas discharged from the water heater may flow through the exhaust passage into the cogeneration unit. Then, one problem is that if the fuel cell is started up in a state where the exhaust gas has flowed into the cogeneration unit, the exhaust gas is supplied to a cathode of the fuel cell, and this deteriorates the power generation efficiency of the fuel cell.

An object of the present invention is to provide a power generation system capable of stably generating electric power and having high durability in the case of providing an exhaust passage causing a fuel cell system and a combustion device to communicate with each other as above, and a method of operating the power generation system.

### Solution to Problem

To solve the above conventional problem, a power generation system according to the present invention includes: a fuel cell system including a fuel cell configured to generate electric power using a fuel gas and an oxidizing gas and a case configured to house the fuel cell; a ventilator; a controller; a combustion device; and a discharge passage formed to cause the case and an exhaust port of the combustion device to communicate with each other and configured to discharge an exhaust gas from the fuel cell system and an exhaust gas from the combustion device to an atmosphere through an opening of the discharge passage, the opening being open to the atmosphere, wherein: the ventilator is configured to discharge a gas in the case to the discharge passage to ventilate an inside of the case; and the controller causes the ventilator to operate when the fuel cell system is in a power generation stop state and the combustion device is operating.

Here, the expression "the combustion device is operating" denotes not only a state where the combustion device is operating and the exhaust gas is being discharged from the combustion device to the discharge passage but also a state where the combustion device starts operating and the discharging of the exhaust gas from the combustion device to the discharge passage starts.

The expression "the fuel cell system is in a power generation stop state" denotes a state before a start-up operation of the fuel cell is started and after a stop operation of the fuel cell is terminated. Therefore, the expression "the fuel cell system is in a power generation stop state" includes a power generation stand-by state that is a state where the fuel cell system is standing by while some auxiliary devices of the fuel cell system are operating.

With this, the exhaust gas discharged from the combustion device can be prevented from flowing into the case when the fuel cell system is in the power generation stop state and the combustion device is operating. Even if the exhaust gas discharged from the combustion device flows into the case when the fuel cell system is in the power generation stop state and the combustion device is operating, the further flow of the exhaust gas into the case can be prevented by activating the ventilator, and the exhaust gas in the case can be discharged to the outside of the case. Therefore, the decrease in the oxygen concentration in the case can be prevented. On this account, the power generation of the fuel cell can be stably performed, and the durability of the power generation system can be improved.

In the power generation system according to the present invention, the controller may cause the ventilator to operate in a case where the combustion device is activated when the fuel cell system is in the power generation stop state.

In the power generation system according to the present invention, the controller may cause the ventilator to operate when an activation signal of the combustion device is input to the controller.

In the power generation system according to the present invention, the controller may cause the ventilator to start operating and then cause the combustion device to start operating.

In the power generation system according to the present invention, the controller may cause the ventilator to operate in a case where discharging of the exhaust gas from the combustion device is detected when the fuel cell system is in the power generation stop state.

The power generation system according to the present invention may further include a first temperature detector provided at least one of on the discharge passage and in the case, wherein the controller causes the ventilator to operate when a temperature detected by the first temperature detector is higher than a first temperature.

The power generation system according to the present invention may further include: an air intake passage provided at an air supply port of the case and configured to supply air to the fuel cell system through an opening of the air intake passage, the opening being open to the atmosphere; and a first temperature detector provided at least one of on the air intake passage, on the discharge passage, and in the case, wherein the controller causes the ventilator to operate when a difference between temperatures detected by the first temperature detector before and after a predetermined time is increased by a predetermined temperature width.

The power generation system according to the present invention may further include a pressure detector configured to detect pressure in the discharge passage, wherein the controller causes the ventilator to operate when the pressure detected by the pressure detector is higher than first pressure.

The power generation system according to the present invention may further include a flow rate detector configured to detect a flow rate of a gas flowing through the discharge passage, wherein the controller causes the ventilator to operate when the flow rate detected by the flow rate detector is higher than a first flow rate.

In the power generation system according to the present invention, the combustion device may include a combustion air supply unit configured to supply combustion air, and the controller controls the ventilator such that static pressure of the ventilator becomes higher than discharge pressure of the combustion air supply unit.

The power generation system according to the present invention may further include an air intake passage formed to cause the case and an air supply port of the combustion device to communicate with each other and configured to supply air to the fuel cell system and the combustion device through an opening of the air intake passage, the opening being open to the atmosphere, wherein the air intake passage is formed so as to be heat-exchangeable with the exhaust passage.

The power generation system according to the present invention may further include a second temperature detector provided on the air intake passage, wherein the controller causes the ventilator to operate when a temperature detected by the second temperature detector is higher than a second temperature.

The power generation system according to the present invention may further include a second temperature detector provided on the air intake passage, wherein the controller causes the ventilator to operate when a difference between temperatures detected by the second temperature detector before and after a predetermined time is lower than a predetermined temperature width.

Further, in the power generation system according to the present invention, the fuel cell system may further include a hydrogen generator including a reformer configured to generate a hydrogen-containing gas from a raw material and steam.

A method of operating a power generation system according to the present invention is a method of operating a power generation system, the power generation system including: a fuel cell system including a fuel cell configured to generate electric power using a fuel gas and an oxidizing gas, a case configured to house the fuel cell, and a ventilator; a combustion device; and a discharge passage formed to cause the case and an exhaust port of the combustion device to communicate with each other and configured to discharge an exhaust gas from the fuel cell system and an exhaust gas from the combustion device to an atmosphere through an opening of the discharge passage, the opening being open to the atmosphere, wherein the ventilator is configured to discharge a gas in the case to the discharge passage to ventilate an inside of the case and is configured to generate predetermined pressure or higher when the fuel cell system is in a power generation stop state and the combustion device is operating.

With this, the exhaust gas discharged from the combustion device can be prevented from flowing into the case when the fuel cell system is in the power generation stop state and the combustion device is operating. Even if the exhaust gas discharged from the combustion device flows into the case when the fuel cell system is in the power generation stop state and the combustion device is operating, the further flow of the exhaust gas into the case can be prevented by activating the ventilator, and the exhaust gas in the case can be discharged to the outside of the case. Therefore, the decrease in the oxygen concentration in the case can be prevented. On this account, the power generation of the fuel cell can be stably performed, and the durability of the power generation system can be improved.

### Advantageous Effects of Invention

According to the power generation system of the present invention, the decrease in the oxygen concentration in the case can be prevented when the fuel cell system is in a power generation stop state and the combustion device is operating. Therefore, the power generation of the fuel cell can be stably performed, and the durability of the power generation system can be improved.

### Brief Description of Drawings

[Fig. 1] Fig. 1 is a schematic diagram showing the schematic configuration of a power generation system according to Embodiment 1 of the present invention.
[Fig. 2] Fig. 2 is a flow chart schematically showing an exhaust gas inflow suppressing operation of the power generation system according to Embodiment 1.
[Fig. 3] Fig. 3 is a flow chart schematically showing the exhaust gas inflow suppressing operation of the power generation system of Modification Example 1 of Embodiment 1.
[Fig. 4] Fig. 4 is a flow chart schematically showing the exhaust gas inflow suppressing operation of the power generation system of Modification Example 2 of Embodiment 1.
[Fig. 5] Fig. 5 is a schematic diagram showing the schematic configuration of the power generation system according to Embodiment 2 of the present invention.
[Fig. 6] Fig. 6 is a flow chart schematically showing the exhaust gas inflow suppressing operation of the power generation system according to Embodiment 2.
[Fig. 7] Fig. 7 is a schematic diagram showing the schematic configuration of the power generation system of Modification Example 1 of Embodiment 2.
[Fig. 8] Fig. 8 is a schematic diagram showing the schematic configuration of the power generation system of Modification Example 2 of Embodiment 2.
[Fig. 9] Fig. 9 is a schematic diagram showing the schematic configuration of the power generation system of Modification Example 3 of Embodiment 2.
[Fig. 10] Fig. 10 is a flow chart schematically showing the exhaust gas inflow suppressing operation of the power generation system of Modification Example 3 of Embodiment 2.
[Fig. 11] Fig. 11 is a schematic diagram showing the schematic configuration of the power generation system of Modification Example 4 of Embodiment 2.
[Fig. 12] Fig. 12 is a flow chart schematically showing the exhaust gas inflow suppressing operation of the power generation system of Modification Example 4 of Embodiment 2.
[Fig. 13] Fig. 13 is a schematic diagram showing the schematic configuration of the power generation system of Modification Example 5 of Embodiment 2.
[Fig. 14] Fig. 14 is a flow chart schematically showing the exhaust gas inflow suppressing operation of the power generation system of Modification Example 5 of Embodiment 2.
[Fig. 15] Fig. 15 is a schematic diagram showing the schematic configuration of the power generation system according to Embodiment 3 of the present invention.

### Description of Embodiments

Hereinafter, preferred embodiments of the present invention will be explained in reference to the drawings. In the drawings, the same reference signs are used for the same or corresponding components, and a repetition of the same explanation is avoided. Moreover, in the drawings, only components necessary to explain the present invention are shown, and the other components are not shown. Further, the present invention is not limited to the following embodiments.

### Embodiment 1

A power generation system according to Embodiment 1 of the present invention includes: a fuel cell system including a fuel cell, a case, and a ventilator; a controller, a combustion device, and a discharge passage. The controller causes the ventilator to operate when the fuel cell system is in a power generation stop state and the exhaust gas is being discharged from the combustion device to the discharge passage.

Here, the expression "the combustion device is operating" denotes not only a state where the combustion device is operating and the exhaust gas is being discharged from the combustion device to the discharge passage but also a state where the combustion device starts operating and the discharging of the exhaust gas from the combustion device to the discharge passage starts.

The expression "the fuel cell system is in a power generation stop state" denotes a state before a start-up operation of the fuel cell is started and after a stop operation of the fuel cell is terminated. Therefore, the expression "the fuel cell system is in a power generation stop state" includes a power generation stand-by state that is a state where the fuel cell system is standing by while some auxiliary devices of the fuel cell system are operating.

The power generation system according to Embodiment 1 may be configured such that the ventilator operates when the fuel cell system is in the power generation stop state and the combustion device is operating or may be configured such that the ventilator operates in the other cases. For example, the power generation system according to Embodiment 1 may be configured such that the ventilator operates not only when the fuel cell system is in the power generation stop state but also when the fuel cell system is performing the electric power generating operation and the combustion device is operating.

When the fuel cell system is operating, the exhaust gas (for example, an off oxidizing gas) is discharged from the fuel cell system. Therefore, even when the ventilator is not operating, the backward flow of the exhaust gas from the combustion device to the fuel cell system is unlikely to occur. In contrast, when the fuel cell system is in the power generation stop state, the exhaust gas (for example, the off oxidizing gas) is not discharged from the fuel cell system. Therefore, if the ventilator is not operating, the backward flow of the exhaust gas from the combustion device to the fuel cell system may occur.

Therefore, in the power generation system according to Embodiment 1, the controller causes the ventilator to operate when the fuel cell system is in the power generation stop state and the combustion device is operating. With this, the backward flow of the exhaust gas from the combustion device to the fuel cell system can be prevented. It should be noted that it is preferable that the ventilator be practically, continuously operating since a combustible gas is supplied to the fuel cell system when the fuel cell system is operating.

Hereinafter, one example of the power generation system according to Embodiment 1 will be specifically explained.

### Configuration of Power Generation System

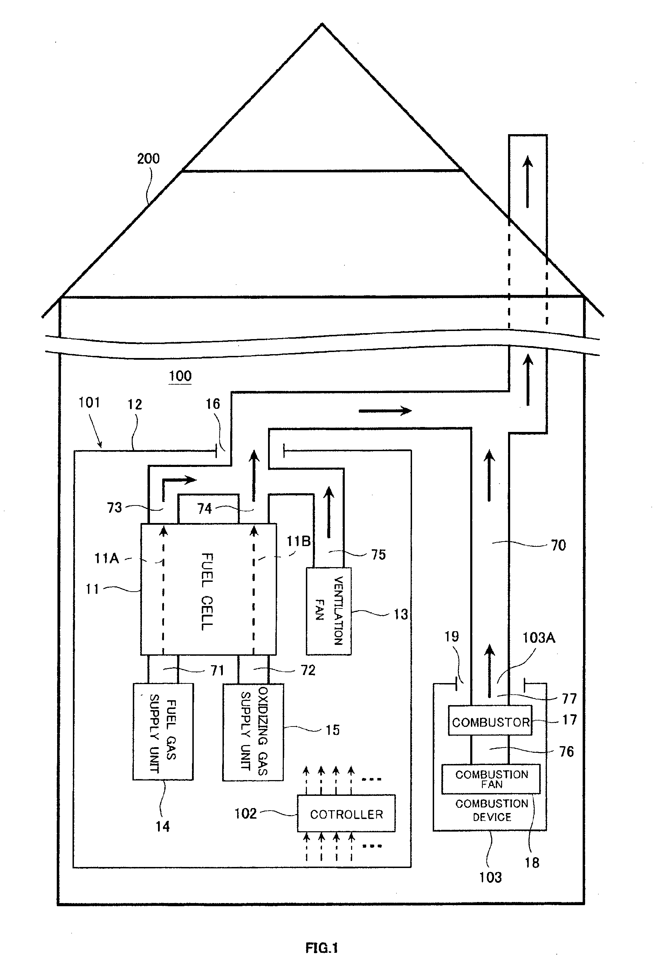

Fig. 1 is a schematic diagram showing the schematic configuration of the power generation system according to Embodiment 1 of the present invention.

As shown in Fig. 1, a power generation system 100 according to Embodiment 1 of the present invention is provided in a building 200. The power generation system 100 includes a fuel cell system 101, a ventilation fan 13, a controller 102, a combustion device 103, and a discharge passage 70. The fuel cell system 101 includes a fuel cell 11 and a case 12. The discharge passage 70 is formed so as to cause the case 12 of the fuel cell system 101 and an exhaust port 103A of the combustion device 103 to communicate with each other. The controller 102 causes the ventilation fan 13 to operate when the fuel cell system 101 is in the power generation stop state and the combustion device 103 is operating (the exhaust gas is being discharged from the combustion device 103 to the discharge passage 70).

In Embodiment 1, the power generation system 100 is provided in the building 200. However, the present embodiment is not limited to this. The power generation system 100 may be provided outside the building 200 as long as the discharge passage 70 is formed so as to cause the case 12 of the fuel cell system 101 and the exhaust port 103A of the combustion device 103 to communicate with each other.

The fuel cell 11, the ventilation fan 13, a fuel gas supply unit 14, and an oxidizing gas supply unit 15 are provided in the case 12 of the fuel cell system 101. The controller 102 is also provided in the case 12. In Embodiment 1, the controller 102 is provided in the case 12 of the fuel cell system 101. However, the present embodiment is not limited to this. The controller 102 may be provided in the combustion device 103 or may be provided separately from the case 12 and the combustion device 103.

A hole 16 penetrating a wall constituting the case 12 in a thickness direction of the wall is formed at an appropriate position of the wall. A pipe constituting the discharge passage 70 is inserted through the hole 16 such that a gap is formed between the hole 16 and the discharge passage 70. The gap between the hole 16 and the discharge passage 70 constitutes an air supply port 16. With this, the air outside the power generation system 100 is supplied through the air supply port 16 to the inside of the case 12.

In Embodiment 1, the hole through which the pipe constituting the discharge passage 70 is inserted and the hole constituting the air supply port 16 are constituted by one hole 16. However, the present embodiment is not limited to this. The hole through which the pipe constituting the discharge passage 70 is inserted and the hole constituting the air supply port 16 may be separately formed on the case 12. The air supply port 16 may be constituted by one hole on the case 12 or may be constituted by a plurality of holes on the case 12.

The fuel gas supply unit 14 may have any configuration as long as it can supply a fuel gas (hydrogen gas) to the fuel cell 11 while adjusting the flow rate of the fuel gas. The fuel gas supply unit 14 may be configured by a device, such as a hydrogen generator, a hydrogen bomb, or a hydrogen absorbing alloy, configured to supply the hydrogen gas. The fuel cell 11 (to be precise, an inlet of a fuel gas channel 11A of the fuel cell 11) is connected to the fuel gas supply unit 14 through a fuel gas supply passage 71.

The oxidizing gas supply unit 15 may have any configuration as long as it can supply an oxidizing gas (air) to the fuel cell 11 while adjusting the flow rate of the oxidizing gas. The oxidizing gas supply unit 15 may be constituted by a fan, a blower, or the like. The fuel cell 11 (to be precise, an inlet of an oxidizing gas channel 11B of the fuel cell 11) is connected to the oxidizing gas supply unit 15 through an oxidizing gas supply passage 72.

The fuel cell 11 includes an anode and a cathode (both not shown). In the fuel cell 11, the fuel gas supplied to the fuel gas channel 11A is supplied to the anode while the fuel gas is flowing through the fuel gas channel 11A. The oxidizing gas supplied to the oxidizing gas channel 11B is supplied to the cathode while the oxidizing gas is flowing through the oxidizing gas channel 11B. The fuel gas supplied to the anode and the oxidizing gas supplied to the cathode react with each other to generate electricity and heat.

The generated electricity is supplied to an external electric power load (for example, a home electrical apparatus) by an electric power conditioner, not shown. The generated heat is recovered by a heat medium flowing through a heat medium channel, not shown. The heat recovered by the heat medium can be used to, for example, heat water.

In Embodiment 1, each of various fuel cells, such as a polymer electrolyte fuel cell, a direct internal reforming type solid-oxide fuel cell, and an indirect internal reforming type solid-oxide fuel cell, may be used as the fuel cell 11. In Embodiment 1, the fuel cell 11 and the fuel gas supply unit 14 are configured separately. However, the present embodiment is not limited to this. Like a solid-oxide fuel cell, the fuel gas supply unit 14 and the fuel cell 11 may be configured integrally. In this case, the fuel cell 11 and the fuel gas supply unit 14 are configured as one unit covered with a common heat insulating material, and a combustor 14b described below can heat not only a reformer 14a but also the fuel cell 11. In the direct internal reforming type solid-oxide fuel cell, since the anode of the fuel cell 11 has the function of the reformer 14a, the anode of the fuel cell 11 and the reformer 14a may be configured integrally. Further, since the configuration of the fuel cell 11 is similar to that of a typical fuel cell, a detailed explanation thereof is omitted.

An upstream end of an off fuel gas passage 73 is connected to an outlet of the fuel gas channel 11A. A downstream end of the off fuel gas passage 73 is connected to the discharge passage 70. An upstream end of an off oxidizing gas passage 74 is connected to an outlet of the oxidizing gas channel 11B. A downstream end of the off oxidizing gas passage 74 is connected to the discharge passage 70.

With this, the fuel gas unconsumed in the fuel cell 11 (hereinafter referred to as an "off fuel gas") is discharged from the outlet of the fuel gas channel 11A through the off fuel gas passage 73 to the discharge passage 70. The oxidizing gas unconsumed in the fuel cell 11 (hereinafter referred to as an "off oxidizing gas") is discharged from the outlet of the oxidizing gas channel 11B through the off oxidizing gas passage 74 to the discharge passage 70. The off fuel gas discharged to the discharge passage 70 is diluted by the off oxidizing gas to be discharged to the outside of the building 200.

The ventilation fan 13 is connected to the discharge passage 70 through a ventilation passage 75. The ventilation fan 13 may have any configuration as long as it can ventilate the inside of the case 12. With this, the air outside the power generation system 100 is supplied through the air supply port 16 to the inside of the case 12, and the gas (mainly, air) in the case 12 is discharged through the ventilation passage 75 and the discharge passage 70 to the outside of the building 200 by activating the ventilation fan 13. Thus, the inside of the case 12 is ventilated.

In Embodiment 1, the fan is used as a ventilator. However, the present embodiment is not limited to this. A blower may be used as the ventilator. The ventilation fan 13 is provided in the case 12. However, the present embodiment is not limited to this. The ventilation fan 13 may be provided in the discharge passage 70. In this case, it is preferable that the ventilation fan 13 be provided upstream of a branch portion of the discharge passage 70.

As above, in Embodiment 1, the off fuel gas, the off oxidizing gas, and the gas in the case 12 by the operation of the ventilation fan 13 are exemplified as the exhaust gas discharged from the fuel cell system 101. The exhaust gas discharged from the fuel cell system 101 is not limited to these gases. For example, in a case where the fuel gas supply unit 14 is constituted by a hydrogen generator, the exhaust gas discharged from the fuel cell system 101 may be the gas (a flue gas, a hydrogen-containing gas, or the like) discharged from the hydrogen generator.

The combustion device 103 includes a combustor 17 and a combustion fan (combustion air supply unit) 18. The combustor 17 and the combustion fan 18 are connected to each other through a combustion air supply passage 76. The combustion fan 18 may have any configuration as long as it can supply combustion air to the combustor 17. The combustion fan 18 may be constituted by a fan, a blower, or the like.

A combustible gas, such as a natural gas, and a combustion fuel, such as a liquid fuel, are supplied to the combustor 17 from a combustion fuel supply unit, not shown. One example of the liquid fuel is kerosene. The combustor 17 combusts the combustion air supplied from the combustion fan 18 and the combustion fuel supplied from the combustion fuel supply unit to generate heat and a flue gas. The generated heat can be used to heat water. To be specific, the combustion device 103 may be used as a boiler.

An upstream end of an exhaust gas passage 77 is connected to the combustor 17, and a downstream end of the exhaust gas passage 77 is connected to the discharge passage 70. With this, the flue gas generated in the combustor 17 is discharged through the exhaust gas passage 77 to the discharge passage 70. To be specific, the flue gas generated in the combustor 17 is discharged to the discharge passage 70 as the exhaust gas discharged from the combustion device 103. The flue gas discharged to the discharge passage 70 flows through the discharge passage 70 to be discharged to the outside of the building 200.

A hole 19 penetrating a wall constituting the combustion device 103 in a thickness direction of the wall is formed at an appropriate position of the wall. A pipe constituting the discharge passage 70 is inserted through the hole 19 such that a gap is formed between the hole 19 and the discharge passage 70. The gap between the hole 19 and the discharge passage 70 constitutes an air supply port 19. With this, the air outside the power generation system 100 is supplied through the air supply port 19 to the inside of the combustion device 103.

To be specific, the discharge passage 70 branches, and two upstream ends thereof are respectively connected to the hole 16 and the hole 19. The discharge passage 70 is formed to extend up to the outside of the building 200, and a downstream end (opening) thereof is open to the atmosphere. With this, the discharge passage 70 causes the case 12 and the exhaust port 103A of the combustion device 103 to communicate with each other.

In Embodiment 1, the hole through which the pipe constituting the discharge passage 70 is inserted and the hole constituting the air supply port 19 are constituted by one hole 19. However, the present embodiment is not limited to this. The hole through which the pipe constituting the discharge passage 70 is inserted (the hole to which the pipe constituting the discharge passage 70 is connected) and the hole constituting the air supply port 19 may be separately formed on the combustion device 103. The air supply port 19 may be constituted by one hole on the combustion device 103 or may be constituted by a plurality of holes on the combustion device 103.

The controller 102 may be any device as long as it controls respective devices constituting the power generation system 100. The controller 102 includes a calculation processing portion, such as a microprocessor or a CPU, and a storage portion, such as a memory, configured to store programs for executing respective control operations. In the controller 102, the calculation processing portion reads out and executes a predetermined control program stored in the storage portion. Thus, the controller 102 processes the information and performs various control operations, such as the above control operations, regarding the power generation system 100.

The controller 102 may be constituted by a single controller or may be constituted by a group of a plurality of controllers which cooperate to execute control operations of the power generation system 100. The controller 102 may be constituted by a microcontroller or may be constituted by a MPU, a PLC (Programmable Logic Controller), a logic circuit, or the like.

### Operations of Power Generation System

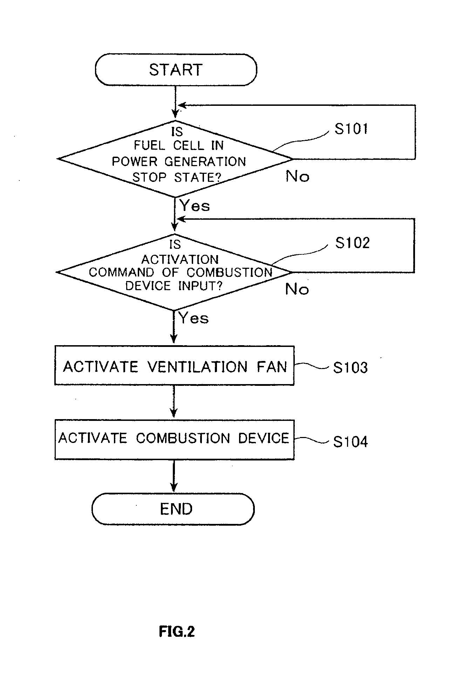

Next, the operations of the power generation system 100 according to Embodiment 1 will be explained in reference to Figs. 1 and 2. Since the electric power generating operation of the fuel cell system 101 of the power generation system 100 is performed in the same manner as the electric power generating operation of a typical fuel cell system, a detailed explanation thereof is omitted. Embodiment 1 is explained on the basis that the controller 102 is constituted by one controller and the controller controls respective devices constituting the power generation system 100.

Fig. 2 is a flow chart schematically showing the exhaust gas inflow suppressing operation of the power generation system according to Embodiment 1.

As shown in Fig. 2, the controller 102 confirms whether or not the fuel cell 11 is in the power generation stop state (Step S101). In a case where the fuel cell 11 is not in the power generation stop state (No in Step S101), the controller 102 repeats Step S101 until the controller 102 confirms that the fuel cell 11 is in the power generation stop state. In contrast, in a case where the fuel cell 11 is in the power generation stop state (Yes in Step S101), the controller 102 proceeds to Step S102.

In Step S102, the controller 102 confirms whether or not an activation command of the combustion device 103 is input. Examples of a case where the activation command of the combustion device 103 is input are a case where a user of the power generation system 100 operates a remote controller, not shown, to instruct the activation of the combustion device 103 and a case where a preset operation start time of the combustion device 103 has come.

In a case where the activation command of the combustion device 103 is not input (No in Step S102), the controller 102 repeats Step S 102 until the activation command of the combustion device 103 is input. In this case, the controller 102 may return to Step S101 and repeat Steps S101 and S102 until the controller 102 confirms that the fuel cell 11 is in the power generation stop state and the activation command of the combustion device 103 is input.

In contrast, in a case where the activation command of the combustion device 103 is input (Yes in Step S102), the controller 102 proceeds to Step S103. In Step S103, the controller 102 activates the ventilation fan 13. At this time, the controller 102 causes the ventilation fan 13 to generate predetermined pressure or higher such that the exhaust gas discharged from the combustion device 103 does not flow into the case 12. Here, the predetermined pressure denotes pressure set such that the exhaust gas discharged from the combustion device to the discharge passage can be prevented from flowing into the case of the fuel cell system. The predetermined pressure is arbitrarily set depending on the length and cross-sectional area of the discharge passage, the combustion performance of the combustion device, and the like. In this case, it is preferable that the controller 102 control the ventilation fan 13 such that static pressure of the ventilation fan 13 becomes higher than discharge pressure of the combustion fan 18.

Next, the controller 102 activates the combustion device 103 (Step S 104). With this, in the combustion device 103, the combustion air is supplied from the combustion fan 18 to the combustor 17, and the combustion fuel is supplied from the combustion fuel supply unit (not shown) to the combustor 17. The combustor 17 combusts the supplied combustion fuel and combustion air to generate the flue gas.

The flue gas (the exhaust gas discharged from the combustion device 103) generated in the combustion device 103 flows through the discharge passage 70 to be discharged to the outside of the building 200. At this time, a part of the flue gas flowing through the discharge passage 70 may flow through the off fuel gas passage 73, the off oxidizing gas passage 74, and the ventilation passage 75 into the case 12. However, in the power generation system 100 according to Embodiment 1, since the ventilation fan 13 is generating the predetermined pressure or higher, the flue gas is prevented from flowing into the case 12.

In Embodiment 1, the ventilation fan 13 is activated before the combustion device 103 is activated. However, the present embodiment is not limited to this. The ventilation fan 13 and the combustion device 103 may be activated at the same time. Or, the ventilation fan 13 may be activated after the combustion device 103 is activated. In this case, a part of the flue gas flowing through the discharge passage 70 sometimes flows through the off fuel gas passage 73, the off oxidizing gas passage 74, and the ventilation passage 75 into the case 12. However, by activating the ventilation fan 13, the further flow of the flue gas into the case 12 can be prevented. In addition, by activating the ventilation fan 13, the flue gas flowed into the case 12 can be discharged to the outside of the case 12.

As above, in the power generation system 100 according to Embodiment 1, when the fuel cell system 101 is in the power generation stop state and the exhaust gas from the combustion device 103 is being discharged to the discharge passage 70, the exhaust gas from the combustion device 103 can be prevented from flowing into the case 12. Even if the exhaust gas from the combustion device 103 flows into the case 12, the exhaust gas can be discharged to the outside of the case 12 by activating the ventilation fan 13.

Therefore, in the power generation system 100 according to Embodiment 1, the decrease in the oxygen concentration in the case 12 and the decrease in the power generation efficiency of the fuel cell 11 can be suppressed, and the durability of the power generation system 100 can be improved.

Here, in a case where a desulfurizer configured to desulfurize a sulfur compound contained in a natural gas or the like is not provided in the combustion device 103, SOₓ is generated by the combustion operation of the combustion device 103. Then, if the generated SOₓ flows through the discharge passage 70 into the case 12 to be supplied to the cathode of the fuel cell 11, the poisoning of the catalyst contained in the cathode may be accelerated.

However, in the power generation system 100 according to Embodiment 1, the exhaust gas (containing SOₓ) from the combustion device 103 is prevented from flowing into the case 12 as described above. Therefore, the SOₓ can be prevented from being supplied to the cathode of the fuel cell 11. Even if the SOₓ flows into the case 12, the SOₓ can be discharged to the outside of the case 12 by activating the ventilation fan 13.

Therefore, in the power generation system 100 according to Embodiment 1, the poisoning of the cathode of the fuel cell 11 and the decrease in the power generation efficiency of the fuel cell 11 can be suppressed, and the durability of the power generation system 100 can be improved.

In Embodiment 1, the discharge passage 70, the off fuel gas passage 73, the off oxidizing gas passage 74, and the exhaust gas passage 77 are explained as different passages. However, the present embodiment is not limited to this. These passages may be regarded as one discharge passage 70.

### Modification Example 1

Next, the power generation system of Modification Example 1 of the power generation system 100 according to Embodiment 1 will be explained.

The power generation system 100 of Modification Example 1 is the same in basic configuration as the power generation system 100 according to Embodiment 1 but is different from the power generation system 100 according to Embodiment 1 in that the controller 102 includes a plurality of controllers and is constituted by a controller (a group of controllers) (hereinafter referred to as a "controller 102B") configured to control the combustion device 103 and a controller (a group of controllers) (hereinafter referred to as a "controller 102A") configured to control respective devices constituting the power generation system 100 except for the combustion device 103. In Modification Example 1, the controller 102B is configured to control only the combustion device 103. However, the present modification example is not limited to this. The controller 102B may be configured to control one or more devices among the respective devices constituting the power generation system 100 except for the combustion device 103.

Each of the controller 102A and the controller 102B includes a communication portion. The controllers 102A and 102B send and receive signals to and from each other through the calculation processing portions and communication portions of the controllers 102A and 102B. Examples of a communication medium connecting the controller 102A and the controller 102B may be a wireless LAN, a local area network, a wide area network, public communication, the Internet, a value-added network, and a commercial network.

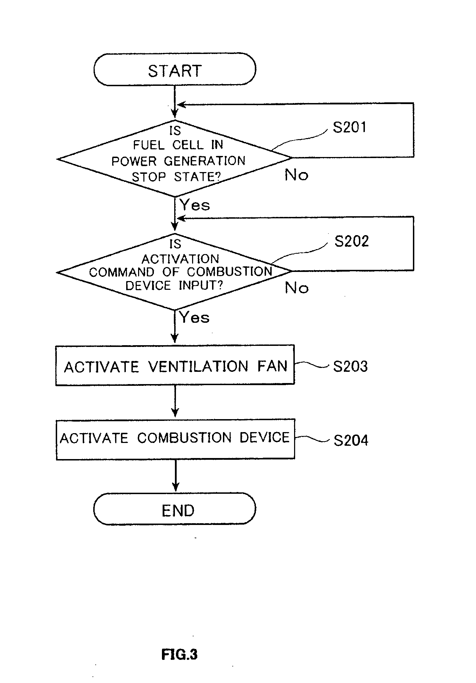

Fig. 3 is a flow chart schematically showing the exhaust gas inflow suppressing operation of the power generation system of Modification Example 1 of Embodiment 1.

As shown in Fig. 3, the controller 102A confirms whether or not the fuel cell 11 is in the power generation stop state (Step S201). In a case where the fuel cell 11 is not in the power generation stop state (No in Step S201), the controller 102A repeats Step S201 until the controller 102 confirms that the fuel cell 11 is in the power generation stop state. In contrast, in a case where the fuel cell 11 is in the power generation stop state (Yes in Step S201), the controller 102A proceeds to Step S202.

In Step S202, the controller 102A confirms whether or not the activation command (activation signal) of the combustion device 103 is input to the controller 102B. In a case where the activation command of the combustion device 103 is not input (No in Step S202), the controller 102A repeats Step S202 until the activation command of the combustion device 103 is input to the controller 102B. In this case, the controller 102 may return to Step S201 and repeat Steps S201 and S202 until the controller 102 confirms that the fuel cell 11 is in the power generation stop state and the activation command of the combustion device 103 is input to the controller 102B.

In contrast, in a case where the activation command of the combustion device 103 is input (Yes in Step S202), the controller 102A proceeds to Step S203. In Step S203, the controller 102A activates the ventilation fan 13. At this time, the controller 102A causes the ventilation fan 13 to generate the predetermined pressure or higher such that the exhaust gas discharged from the combustion device 103 does not flow into the case 12. In this case, it is preferable that the controller 102A control the ventilation fan 13 such that the static pressure of the ventilation fan 13 becomes higher than the discharge pressure of the combustion fan 18.

Next, the controller 102A outputs the activation command of the combustion device 103 to the controller 102B, and the controller 102B activates the combustion device 103 (Step S204). In Modification Example 1, the ventilation fan 13 is activated before the combustion device 103 is activated. However, the present modification example is not limited to this. The ventilation fan 13 may be activated after the combustion device 103 is activated, or the ventilation fan 13 and the combustion device 103 may be activated at the same time.

The power generation system 100 of Modification Example 1 configured as above also has the same operational advantages as the power generation system 100 according to Embodiment 1.

In Modification Example 1, the controller 102B activates the combustion device 103 after the activation command of the combustion device 103 is input from the controller 102A to the controller 102B. However, the present modification example is not limited to this. The controller 102B may be configured to directly activate the combustion device 103. Even in this case, one of the ventilation fan 13 and the combustion device 103 may be activated before the other is activated, or the ventilation fan 13 and the combustion device 103 may be activated at the same time.

### Modification Example 2

Next, the power generation system of Modification Example 2 of the power generation system 100 according to Embodiment 1 will be explained.

The power generation system 100 of Modification Example 2 is the same in basic configuration as the power generation system 100 according to Embodiment 1 but is different from the power generation system 100 according to Embodiment 1 in that: the combustion device 103 includes a calculation processing portion and a communication portion; a manipulate signal input from a remote controller and a control signal from the controller 102 are directly input to the communication portion of the combustion device 103; and the calculation processing portion of the combustion device 103 processes these signals.

Examples of a communication medium connecting the communication portion of the controller 102 and the communication portion of the combustion device 103 may be a wireless LAN, a local area network, a wide area network, public communication, the Internet, a value-added network, and a commercial network.

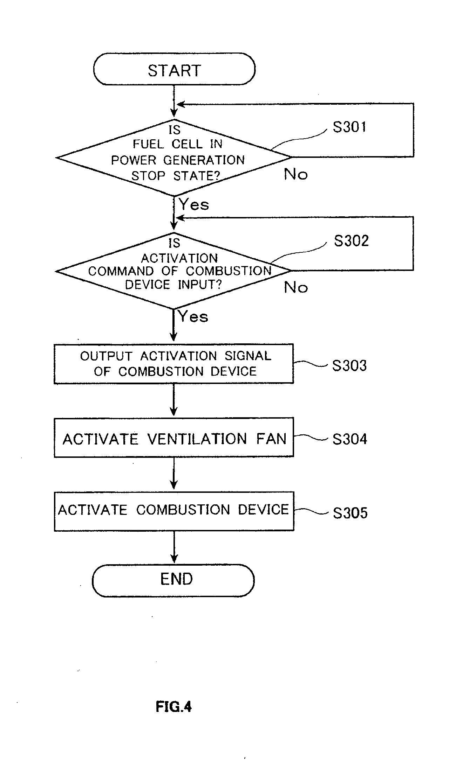

Fig. 4 is a flow chart schematically showing the exhaust gas inflow suppressing operation of the power generation system of Modification Example 2 of Embodiment 1.

As shown in Fig. 4, the controller 102 confirms whether or not the fuel cell 11 is in the power generation stop state (Step S301). In a case where the fuel cell 11 is not in the power generation stop state (No in Step S301), the controller 102 repeats Step S301 until the controller 102 confirms that the fuel cell 11 is in the power generation stop state. In contrast, in a case where the fuel cell 11 is in the power generation stop state (Yes in Step S301), the controller 102 proceeds to Step S302.

In Step S302, the calculation processing portion of the combustion device 103 confirms whether or not the activation command of the combustion device 103 is input to the calculation processing portion of the combustion device 103. In a case where the activation command of the combustion device 103 is not input (No in Step S302), the calculation processing portion of the combustion device 103 repeats Step S302 until the activation command of the combustion device 103 is input to the calculation processing portion.

In contrast, in a case where the activation command of the combustion device 103 is input (Yes in Step S302), the calculation processing portion of the combustion device 103 proceeds to Step S303. In Step S303, the calculation processing portion of the combustion device 103 outputs the activation signal of the combustion device 103 through the communication portion of the combustion device 103 to the controller 102. Next, the calculation processing portion of the combustion device 103 activates the combustion device 103 (Step S304).

Then, the controller 102 activates the ventilation fan 13 (Step S305) when the activation signal is input from the combustion device 103 (to be precise, the calculation processing portion and communication portion of the combustion device 103). At this time, the controller 102 causes the ventilation fan 13 to generate the predetermined pressure or higher such that the exhaust gas discharged from the combustion device 103 does not flow into the case 12. In this case, it is preferable that the controller 102 control the ventilation fan 13 such that the static pressure of the ventilation fan 13 becomes higher than the discharge pressure of the combustion fan 18.

In Modification Example 2, the combustion device 103 is activated before the ventilation fan 13 is activated. However, the present modification example is not limited to this. The combustion device 103 may be activated after the ventilation fan 13 is activated, or the ventilation fan 13 and the combustion device 103 are activated at the same time.

The power generation system 100 of Modification Example 2 configured as above also has the same operational advantages as the power generation system 100 according to Embodiment 1.

### Embodiment 2

The power generation system according to Embodiment 2 of the present invention is configured such that the controller causes the ventilator to operate in a case where the discharging of the exhaust gas from the combustion device is detected when the fuel cell system is in the power generation stop state.

### Configuration of Power Generation System

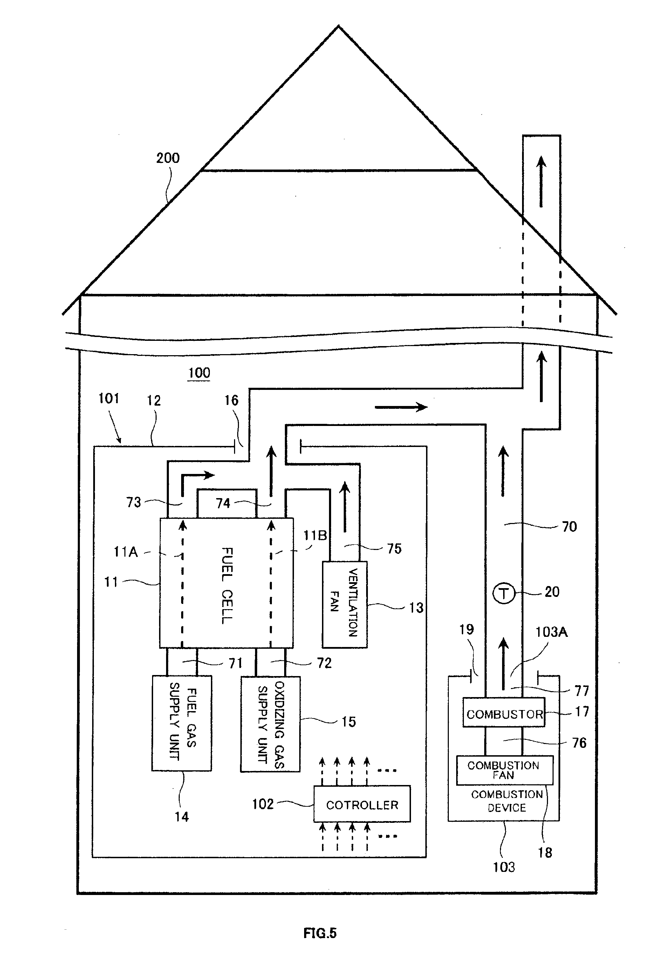

Fig. 5 is a schematic diagram showing the schematic configuration of the power generation system according to Embodiment 2 of the present invention.

As shown in Fig. 5, the power generation system 100 according to Embodiment 2 of the present invention is the same in basic configuration as the power generation system 100 according to Embodiment 1 but is different from the power generation system 100 according to Embodiment 1 in that a first temperature detector 20 is provided on the discharge passage 70. The first temperature detector 20 may have any configuration as long as it can detect the temperature of the gas in the discharge passage 70. Examples of the first temperature detector 20 are a thermocouple and an infrared sensor. In Embodiment 2, the first temperature detector 20 is provided inside the discharge passage 70. However, the present embodiment is not limited to this. The first temperature detector 20 may be provided outside the discharge passage 70. It is preferable that the first temperature detector 20 be provided as close to the combustion device 103 as possible in order to accurately detect the discharging of the exhaust gas from the combustion device 103. The first temperature detector 20 may be provided on the exhaust gas passage 77.

### Operations of Power Generation System

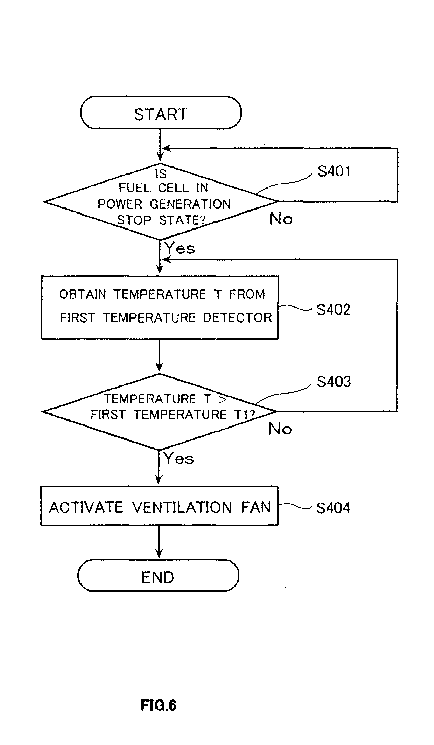

Fig. 6 is a flow chart schematically showing the exhaust gas inflow suppressing operation of the power generation system according to Embodiment 2.

As shown in Fig. 6, the controller 102 confirms whether or not the fuel cell 11 is in the power generation stop state (Step S401). In a case where the fuel cell 11 is not in the power generation stop state (No in Step S401), the controller 102 repeats Step S401 until the controller 102 confirms that the fuel cell 11 is in the power generation stop state. In contrast, in a case where the fuel cell 11 is in the power generation stop state (Yes in Step S401), the controller 102 proceeds to Step S402.

In Step S402, the controller 102 obtains a temperature T of the gas in the discharge passage 70, the temperature T being detected by the first temperature detector 20. Then, the controller 102 determines whether or not the temperature T obtained in Step S402 is higher than a first temperature T1 (Step S403). Here, the first temperature T1 may be, for example, a temperature range of the exhaust gas flowing through the discharge passage 70 from the combustion device 103, the temperature range being obtained in advance by experiments or the like. Or, the first temperature T1 may be set as, for example, a temperature that is higher than the temperature inside the building 200 or the outside temperature by a predetermined temperature (for example, 20°C) or more.

In a case where the temperature T obtained in Step S402 is equal to or lower than the first temperature T1 (No in Step S403), the controller 102 returns to Step S402 and repeats Steps S402 and S403 until the temperature T becomes higher than the first temperature T1. In this case, the controller 102 may return to Step S401 and repeat Steps S401 to S403 until the controller 102 confirms that the fuel cell 11 is in the power generation stop state and the temperature T is higher than the first temperature T1.

In contrast, in a case where the temperature T obtained in Step S402 is higher than the first temperature T1 (Yes in Step S403), the controller 102 proceeds to Step S404. In Step S404, the controller 102 activates the ventilation fan 13. At this time, the controller 102 causes the ventilation fan 13 to generate the predetermined pressure or higher such that the exhaust gas discharged from the combustion device 103 does not flow into the case 12. In this case, it is preferable that the controller 102 control the ventilation fan 13 such that the static pressure of the ventilation fan 13 becomes higher than the discharge pressure of the combustion fan 18.

The power generation system 100 according to Embodiment 2 configured as above also has the same operational advantages as the power generation system 100 according to Embodiment 1.

In the power generation system 100 according to Embodiment 2, whether or not the combustion device 103 is operating is determined by determining whether or not the temperature T detected by the first temperature detector 20 is higher than the first temperature T1. However, the present embodiment is not limited to this. For example, when the difference between the temperatures T detected by the first temperature detector 20 before and after a predetermined time is higher than a predetermined threshold temperature obtained in advance by experiments or the like, it may be determined that the combustion device 103 is operating.

### Modification Example 1

Next, the power generation system of Modification Example 1 of the power generation system 100 according to Embodiment 2 will be explained.

The power generation system of Modification Example 1 further includes the first temperature detector provided in the case, and the controller causes the ventilator to operate when the temperature detected by the first temperature detector is higher than the first temperature.

### Configuration of Power Generation System

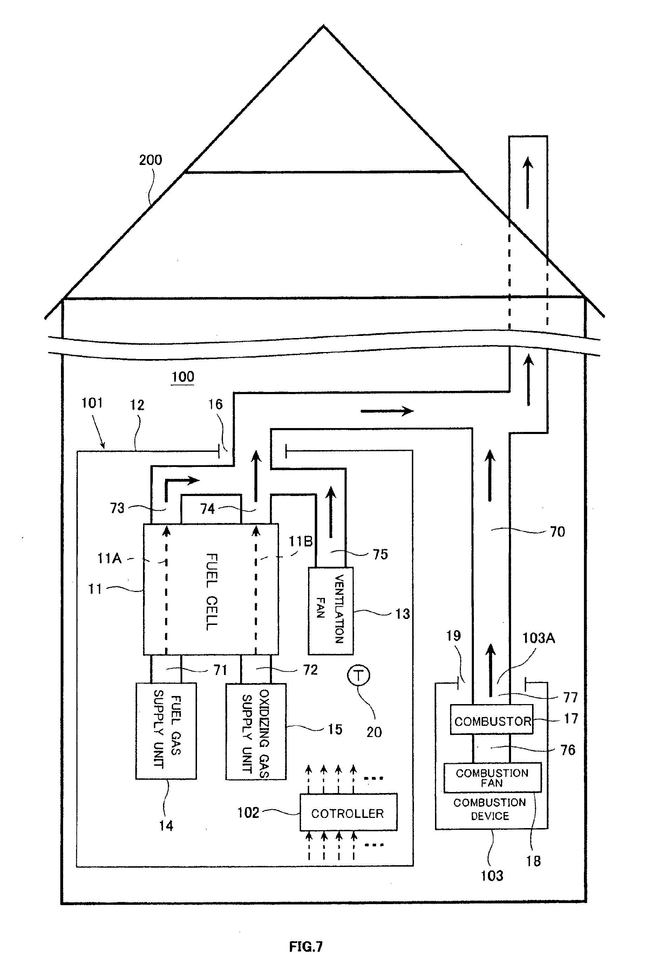

Fig. 7 is a schematic diagram showing the schematic configuration of the power generation system of Modification Example 1 of Embodiment 2.

As shown in Fig. 7, the power generation system 100 of Modification Example 1 is the same in basic configuration as the power generation system 100 according to Embodiment 2 but is different from the power generation system 100 according to Embodiment 2 in that the first temperature detector 20 is provided inside the case 12. It is preferable that the first temperature detector 20 be provided at such a position that the first temperature detector 20 can detect the discharging of the exhaust gas from the combustion device 103 as quickly as possible. For example, it is preferable that the first temperature detector 20 be provided in the vicinity of the off fuel gas passage 73, the off oxidizing gas passage 74, or the ventilation passage 75, or it is preferable that the first temperature detector 20 be provided in the vicinity of an air intake port of the ventilator 13.

The power generation system 100 of Modification Example 1 configured as above also has the same operational advantages as the power generation system 100 according to Embodiment 2.

### Modification Example 2

Next, the power generation system of Modification Example 2 of the power generation system 100 according to Embodiment 2 will be explained.

The power generation system of Modification Example 2 further includes: an air intake passage formed at the air supply port of the case and configured to supply air to the fuel cell system through an opening of the air intake passage, the opening being open to the atmosphere; and a first temperature detector provided on the air intake passage, and the controller causes the ventilator to operate when the difference between the temperatures detected by the first temperature detector before and after a predetermined time is increased by a predetermined temperature width.

### Configuration of Power Generation System

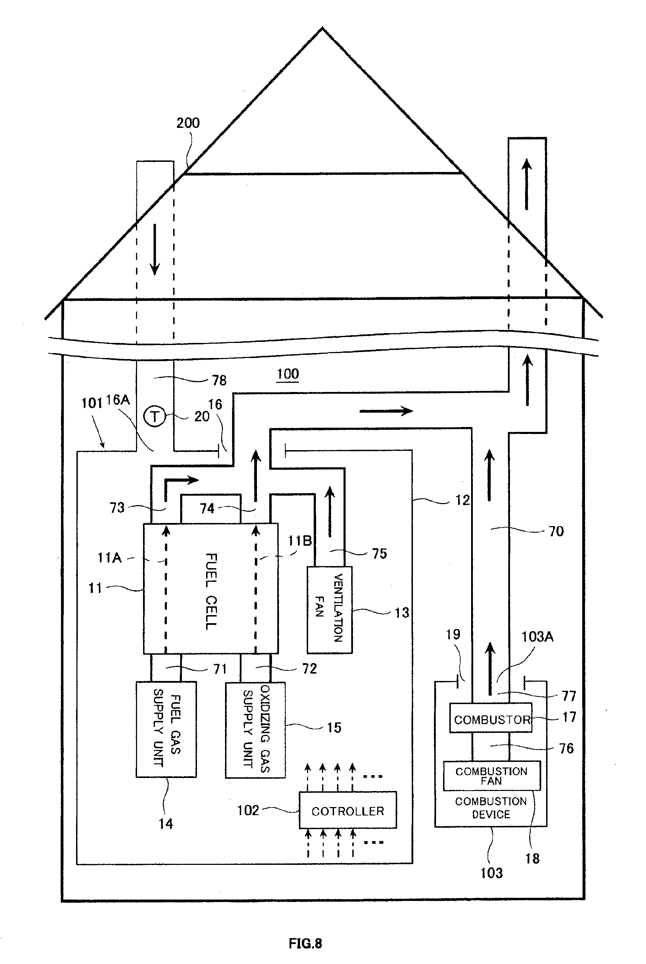

Fig. 8 is a schematic diagram showing the schematic configuration of the power generation system of Modification Example 2 of Embodiment 2.

As shown in Fig. 8, the power generation system 100 of Modification Example 2 is the same in basic configuration as the power generation system 100 according to Embodiment 2 but is different from the power generation system 100 according to Embodiment 2 in that: an air intake passage 78 is further included; and the first temperature detector 20 is provided on the air intake passage 78.

Specifically, the air intake passage 78 is formed so as to extend up to the outside of the building 200. An upstream end of the air intake passage 78 is connected to the air supply port 16A of the case 12, and a downstream end (opening) thereof is open to the atmosphere. The first temperature detector 20 may have any configuration as long as it can detect the temperature of the gas in the air intake passage 78. Examples of the first temperature detector 20 are a thermocouple and an infrared sensor. In Modification Example 2, the first temperature detector 20 is provided inside the air intake passage 78. However, the present modification example is not limited to this. The first temperature detector 20 may be provided inside the discharge passage 70 or the case 12.

The controller 102 calculates the difference between the temperatures T obtained from the first temperature detector 20 in Step S402 and determines in Step S403 that the combustion device 103 is operating, in a case where the above difference, that is, the difference between the temperatures T detected by the first temperature detector 20 before and after the predetermined time is increased by a predetermined threshold temperature width obtained in advance by experiments or the like.

The power generation system 100 of Modification Example 2 configured as above also has the same operational advantages as the power generation system 100 according to Embodiment 2.

In Modification Example 2, the controller 102 is configured to activate the ventilation fan 13 when the difference between the temperatures detected by the first temperature detector 20 before and after the predetermined time is increased by the predetermined temperature width. However, the present modification example is not limited to this. As with Modification Example 1, the controller 102 may be configured to determine whether or not the temperature detected by the first temperature detector 20 is higher than the first temperature to determine whether or not the combustion device 103 is operating.

### Modification Example 3

Next, the power generation system of Modification Example 3 of the power generation system 100 according to Embodiment 2 will be explained.

The power generation system of Modification Example 3 further includes a pressure detector configured to detect the pressure in the discharge passage, and the controller causes the ventilator to operate when the pressure detected by the pressure detector is higher than first pressure.

### Configuration of Power Generation System

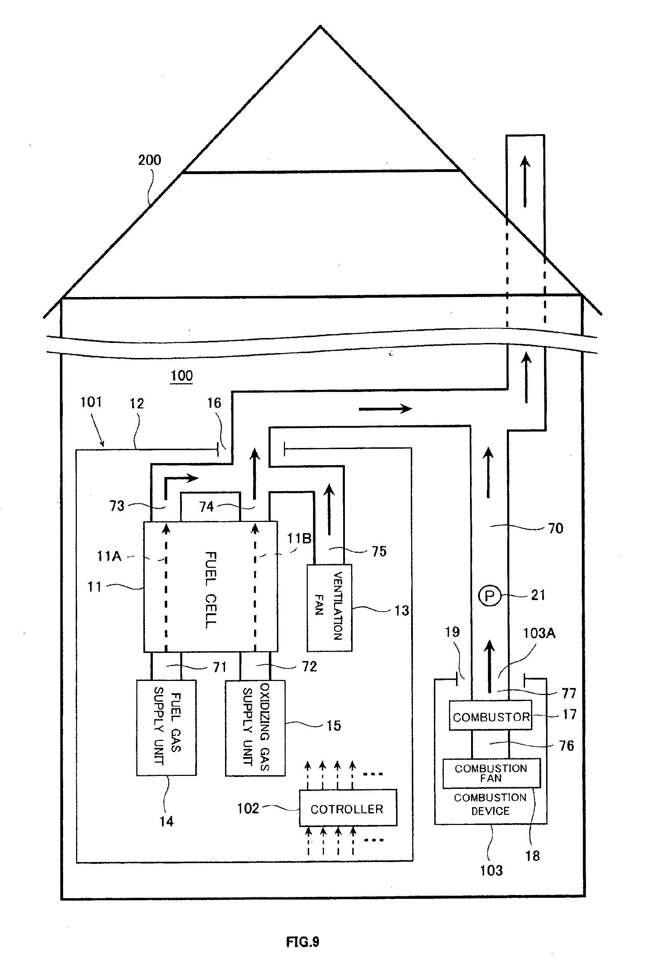

Fig. 9 is a schematic diagram showing the schematic configuration of the power generation system of Modification Example 3 of Embodiment 2.

As shown in Fig. 9, the power generation system 100 of Modification Example 3 is the same in basic configuration as the power generation system 100 according to Embodiment 2 but is different from the power generation system 100 according to Embodiment 2 in that a pressure detector 21 configured to detect the pressure of the gas in the discharge passage 70 is provided instead of the first temperature detector 20. The pressure detector 21 may have any configuration as long as it can detect the pressure in the discharge passage 70, and a device to be used is not limited. In Modification Example 2, the pressure detector 21 is provided inside the discharge passage 70. However, the present modification example is not limited to this. The pressure detector 21 may be configured such that a sensor portion thereof is provided inside the discharge passage 70 and the other portion thereof is provided outside the discharge passage 70.

### Operations of Power Generation System

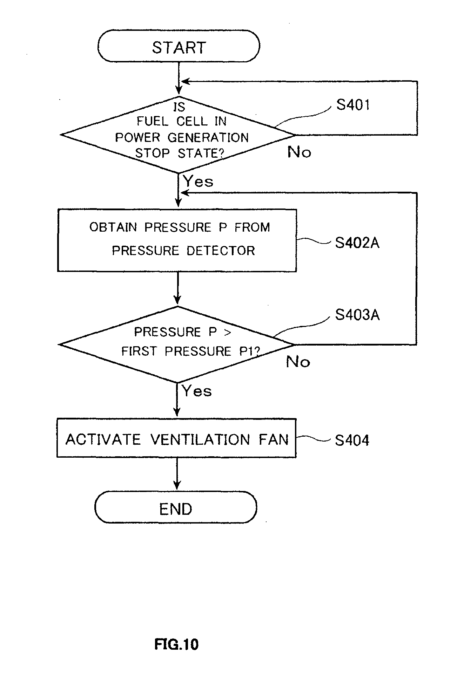

Fig. 10 is a flow chart schematically showing the exhaust gas inflow suppressing operation of the power generation system of Modification Example 3 of Embodiment 2.

As shown in Fig. 10, the exhaust gas inflow suppressing operation of the power generation system 100 of Modification Example 3 is basically the same as the exhaust gas inflow suppressing operation of the power generation system 100 according to Embodiment 2 but is different from the exhaust gas inflow suppressing operation of the power generation system 100 according to Embodiment 2 in that Steps S402A and S403A are performed instead of Steps S402 and S403 of Embodiment 2. Specifically, the controller 102 obtains pressure P in the discharge passage 70, the pressure P being detected by the pressure detector 21 (Step S402A). Next, the controller 102 determines whether or not the pressure P obtained in Step S402A is higher than first pressure P1 (Step S403A). Here, the first pressure P1 may be, for example, a pressure range of the exhaust gas flowing through the discharge passage 70 from the combustion device 103, the pressure range being obtained in advance by experiments or the like. Or, the first pressure P1 may be set as, for example, pressure that is higher than the atmospheric pressure by predetermined pressure (for example, 100 Pa) or more.

In a case where the pressure P obtained in Step S402A is equal to or lower than the first pressure P1 (No in Step S403A), the controller 102 returns to Step S402A and repeats Steps S402A and S403A until the pressure P becomes higher than the first pressure P1. In this case, the controller 102 may return to Step S401 and repeat Steps S401 to S403A until the controller 102 confirms that the fuel cell 11 is in the power generation stop state and the pressure P is higher than the first pressure P1.

In contrast, in a case where the pressure P obtained in Step S402A is higher than the first pressure P1 (Yes in Step S403A), the controller 102 proceeds to Step S404. In Step S404, the controller 102 activates the ventilation fan 13.

The power generation system 100 of Modification Example 3 configured as above also has the same operational advantages as the power generation system 100 according to Embodiment 2.

In Modification Example 3, whether or not the combustion device 103 is operating is determined by determining whether or not the pressure P detected by the pressure detector 21 is higher than the first pressure P1. However, the present modification example is not limited to this. For example, the controller 102 may determine that the combustion device 103 is operating, in a case where the difference between the pressures detected by the pressure detector 21 before and after a predetermined time is higher than a predetermined threshold pressure obtained in advance by experiments or the like.

### Modification Example 4

Next, the power generation system of Modification Example 4 of the power generation system 100 according to Embodiment 2 will be explained.

The power generation system of Modification Example 4 further includes a flow rate detector configured to detect the flow rate of the gas flowing through the discharge passage, and the controller causes the ventilator to operate when the flow rate detected by the flow rate detector is higher than a first flow rate.

### Configuration of Power Generation System

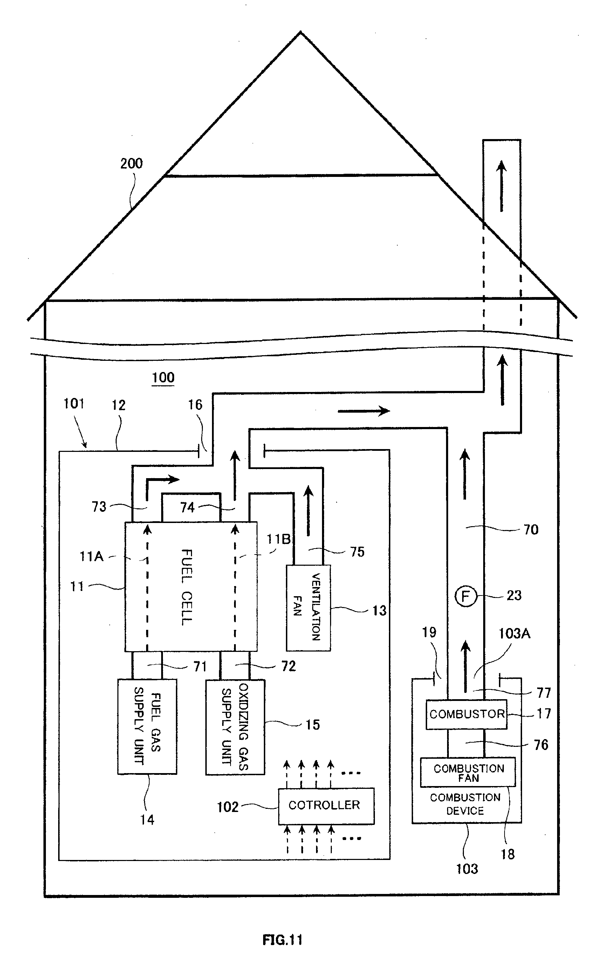

Fig. 11 is a schematic diagram showing the schematic configuration of the power generation system of Modification Example 4 of Embodiment 2.

As shown in Fig. 11, the power generation system 100 of Modification Example 4 is the same in basic configuration as the power generation system 100 according to Embodiment 2 but is different from the power generation system 100 according to Embodiment 2 in that a flow rate detector 23 configured to detect the flow rate of the gas in the discharge passage 70 is provided instead of the first temperature detector 20. The flow rate detector 23 may have any configuration as long as it can detect the flow rate of the gas in the discharge passage 70, and a device to be used is not limited. In Modification Example 4, the flow rate detector 23 is provided inside the discharge passage 70. However, the present modification example is not limited to this. The flow rate detector 23 may be configured such that a sensor portion thereof is provided inside the discharge passage 70 and the other portion thereof is provided outside the discharge passage 70.

### Operations of Power Generation System

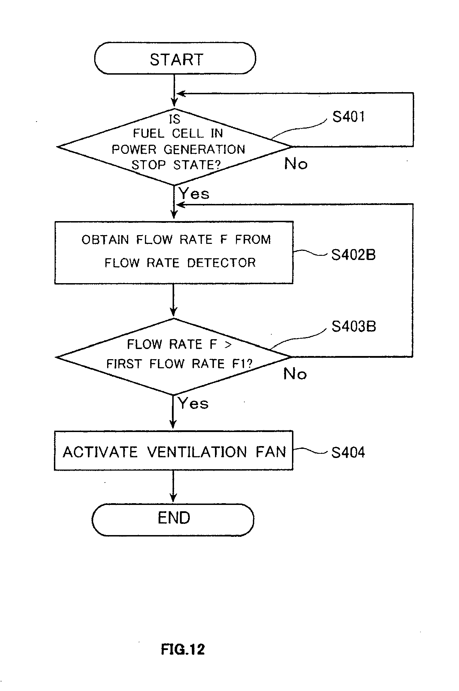

Fig. 12 is a flow chart schematically showing the exhaust gas inflow suppressing operation of the power generation system of Modification Example 4 of Embodiment 2.

As shown in Fig. 12, the exhaust gas inflow suppressing operation of the power generation system 100 of Modification Example 4 is basically the same as the exhaust gas inflow suppressing operation of the power generation system 100 according to Embodiment 2 but is different from the exhaust gas inflow suppressing operation of the power generation system 100 according to Embodiment 2 in that Steps S402B and S403B are performed instead of Steps S402 and S403 of Embodiment 2.

Specifically, the controller 102 obtains a flow rate F of the gas in the discharge passage 70, the flow rate F being detected by the flow rate detector 23 (Step S402B). Next, the controller 102 determines whether or not the flow rate F obtained in Step S402B is higher than a first flow rate F1 (Step S403A). Here, the first flow rate F1 may be set as, for example, a flow rate range of the exhaust gas flowing through the discharge passage 70 from the combustion device 103, the flow rate range being obtained in advance by experiments or the like. Or, for example, the first flow rate F1 may be any flow rate as long as it is equal to or higher than 0 L/min that is the flow rate when the fuel cell system is in a stop state. The first flow rate F1 may be 1 L/min.

In a case where the flow rate F obtained in Step S402B is equal to or lower than the first flow rate F1 (No in Step S403B), the controller 102 returns to Step S402B and repeats Steps S402B and Step S403B until the flow rate F becomes higher than the first flow rate F1. In this case, the controller 102 may return to Step S401 and repeat Steps S401 to S403B until the controller 102 confirms that the ventilation fan 13 is operating and the flow rate F is higher than the first flow rate F1.

In contrast, in a case where the flow rate F obtained in Step S402B is higher than the first flow rate F1 (Yes in Step S403B), the controller 102 proceeds to Step S404. In Step S404, the controller 102 activates the ventilation fan 13.

The power generation system 100 of Modification Example 4 configured as above also has the same operational advantages as the power generation system 100 according to Embodiment 2.

In Modification Example 4, whether or not the combustion device 103 is operating is determined by determining whether or not the flow rate F detected by the flow rate detector 23 is higher than the first flow rate F1. However, the present modification example is not limited to this. For example, the controller 102 may determine that the combustion device 103 is operating, in a case where the difference between the flow rates detected by the flow rate detector 23 before and after a predetermined time is higher than a predetermined threshold flow rate obtained in advance by experiments or the like.

### Modification Example 5

The power generation system of Modification Example 5 further includes: an air intake passage formed to cause the case and the air supply port of the combustion device to communicate with each other and configured to supply air to the fuel cell system and the combustion device through an opening of the air intake passage, the opening being open to the atmosphere; and a second temperature detector provided on the air intake passage, and the air intake passage is formed so as to be heat-exchangeable with the exhaust passage, and the controller causes the ventilator to operate when the temperature detected by the second temperature detector is higher than a second temperature.

Here, the expression "the air intake passage is formed so as to be heat-exchangeable with the discharge passage" denotes that the air intake passage and the discharge passage do not have to contact each other and may be spaced apart from each other to a level that the gas in the air intake passage and the gas in the exhaust passage are heat-exchangeable with each other. Therefore, the air intake passage and the discharge passage may be formed with a space therebetween. Or, one of the air intake passage and the discharge passage may be formed inside the other. To be specific, a pipe constituting the air intake passage and a pipe constituting the exhaust passage may be formed as a double pipe.

### Configuration of Power Generation System

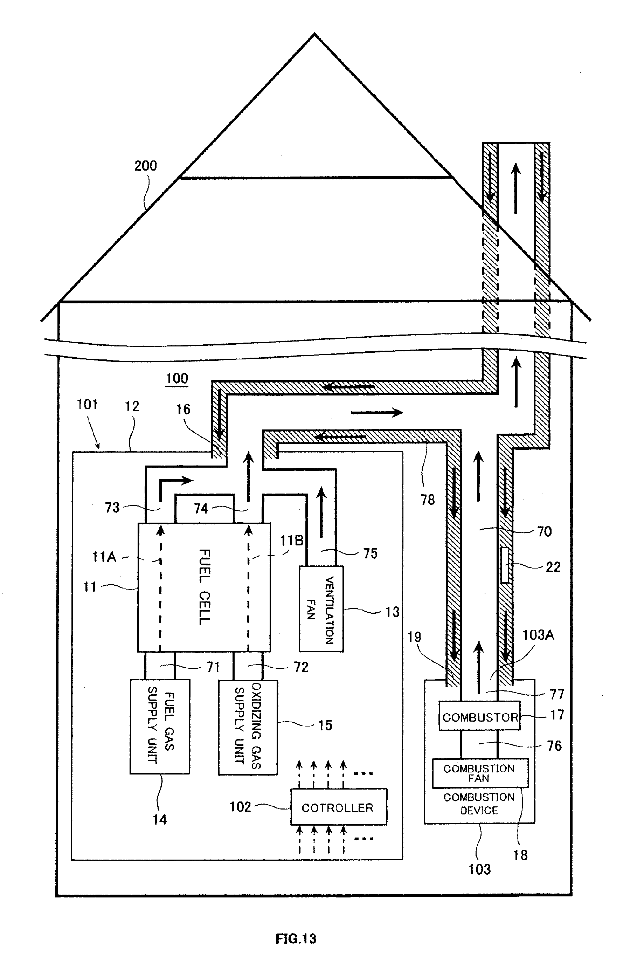

Fig. 13 is a schematic diagram showing the schematic configuration of the power generation system of Modification Example 5 of Embodiment 2. In Fig. 13, the air intake passage is shown by hatching.

As shown in Fig. 13, the power generation system 100 of Modification Example 5 is the same in basic configuration as the power generation system 100 according to Embodiment 2 but is different from the power generation system 100 according to Embodiment 2 in that: the air intake passage 78 is formed; and a second temperature detector 22 is provided on the air intake passage 78 instead of the first temperature detector 20.

Specifically, the second temperature detector 22 may have any configuration as long as it can detect the temperature of the gas in the air intake passage 78. Examples of the second temperature detector 22 are a thermocouple and an infrared sensor. In Modification Example 5, the second temperature detector 22 is provided inside the air intake passage 78. However, the present modification example is not limited to this. The second temperature detector 22 may be provided outside the air intake passage 78. It is preferable that the second temperature detector 22 be provided as close to the combustion device 103 as possible in order to accurately detect the discharging of the exhaust gas from the combustion device 103.

The air intake passage 78 is formed so as to: cause the combustion device 103 and the case 12 of the fuel cell system 101 to communicate with each other; supply air to the combustion device 103 and the fuel cell system 101 from the outside (herein, the outside of the building 200); and surround an outer periphery of the discharge passage 70.

More specifically, the air intake passage 78 branches, and two downstream ends thereof are respectively connected to the hole 16 and the hole 19. The air intake passage 78 is formed to extend up to the outside of the building 200, and an upstream end (opening) thereof is open to the atmosphere. With this, the air intake passage 78 causes the case 12 and the combustion device 103 to communicate with each other, and the air can be supplied from the outside of the power generation system 100 to the fuel cell system 101 and the combustion device 103.

The air intake passage 78 and the discharge passage 70 are constituted by a so-called double pipe. With this, when the flue gas (exhaust gas) is discharged from the combustion device 103 to the discharge passage 70, the gas in the air intake passage 78 is heated by the heat transfer from the flue gas. Therefore, whether or not the exhaust gas is discharged from the combustion device 103 to the discharge passage 70 can be determined based on the temperature detected by the second temperature detector 22.

### Operations of Power Generation System

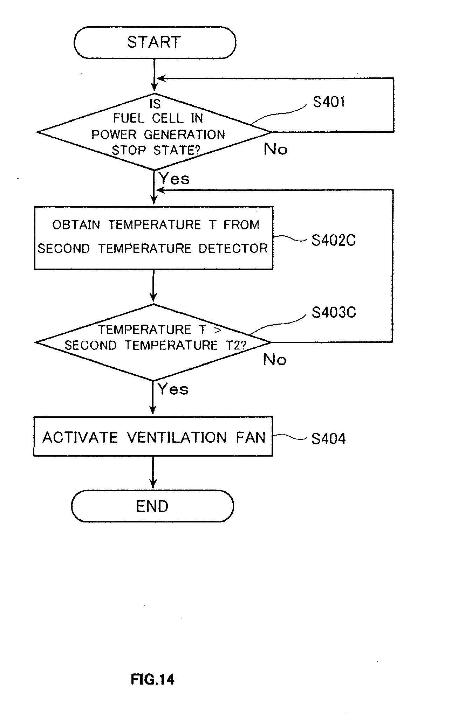

Fig. 14 is a flow chart schematically showing the exhaust gas inflow suppressing operation of the power generation system of Modification Example 5 of Embodiment 2.

As shown in Fig. 14, the exhaust gas inflow suppressing operation of the power generation system 100 of Modification Example 5 is basically the same as the exhaust gas inflow suppressing operation of the power generation system 100 according to Embodiment 2 but is different from the exhaust gas inflow suppressing operation of the power generation system 100 according to Embodiment 2 in that Steps S402C and S403C are performed instead of Steps S402 and S403 of Embodiment 2. Specifically, the controller 102 obtains the temperature T of the gas in the air intake passage 78, the temperature T being detected by the second temperature detector 22 (Step S402C). Then, the controller 102 determines whether or not the temperature T obtained in Step S402C is higher than a second temperature T2 (Step S403C). Here, the second temperature T2 may be, for example, a temperature range in the air intake passage 78 when the exhaust gas discharged from the combustion device 103 flows through the discharge passage 70, the temperature range being obtained in advance by experiments or the like. Or, for example, the second temperature T2 may be set as, for example, a temperature that is higher than the internal temperature of the building 200 or the outside temperature by a predetermined temperature (for example, 20°C) or more.

In a case where the temperature T obtained in Step S402C is equal to or lower than the second temperature T2 (No in Step S403C), the controller 102 returns to Step S402C and repeats Steps S402C and S403C until the temperature T becomes higher than the second temperature T2. In this case, the controller 102 may return to Step S401 and repeat Steps S401 to S403C until the controller 102 confirms that the fuel cell 11 is in the power generation stop state and the temperature T is higher than the second temperature T2.

In contrast, in a case where the temperature T obtained in Step S402C is higher than the second temperature T2 (Yes in Step S403C), the controller 102 proceeds to Step S404. In Step S404, the controller 102 activates the ventilation fan 13.

The power generation system 100 of Modification Example 5 configured as above also has the same operational advantages as the power generation system 100 according to Embodiment 2.

In the power generation system 100 of Modification Example 5, whether or not the combustion device 103 is operating is determined by determining whether or not the temperature T detected by the second temperature detector 22 is higher than the second temperature T2. However, the present modification example is not limited to this. For example, the controller 102 may determine that the combustion device 103 is operating, in a case where the difference between the temperatures T detected by the second temperature detector 22 before and after a predetermined time is higher than a predetermined threshold temperature obtained in advance by experiments or the like.

As described above, when the fuel cell system 101 and the ventilation fan 13 are not operating and the combustion device 103 is activated, the exhaust gas discharged from the combustion device 103 may flow through the discharge passage 70 into the case 12. For example, if the exhaust gas discharged from the combustion device 103 flows only to the case 12, the backward flow of the outside air through an air port of the discharge passage 70 into the case 12 occurs. Here, for example, when the outside air temperature is low, the temperature detected by the second temperature detector 22 may drop.

When the fuel cell system 101, the ventilation fan 13, and the combustion device 103 are not operating and the combustion device 103 is activated, the outside air flows through an air port of the air intake passage 78 into the case 12 by the activation of the combustion fan 18. Therefore, when the outside air temperature is low, the temperature detected by the second temperature detector 22 may drop.

On this account, the controller 102 may determine that the combustion device 103 is operating, in a case where the difference between the temperatures T detected by the second temperature detector 22 before and after the predetermined time is lower than a third temperature T3 obtained in advance by experiments or the like. The third temperature T3 may be, for example, 10°C.

### Embodiment 3

The power generation system according to Embodiment 3 of the present invention is configured such that the fuel cell system further includes a hydrogen generator including a reformer configured to generate a hydrogen-containing gas from a raw material and steam.

### Configuration of Power Generation System

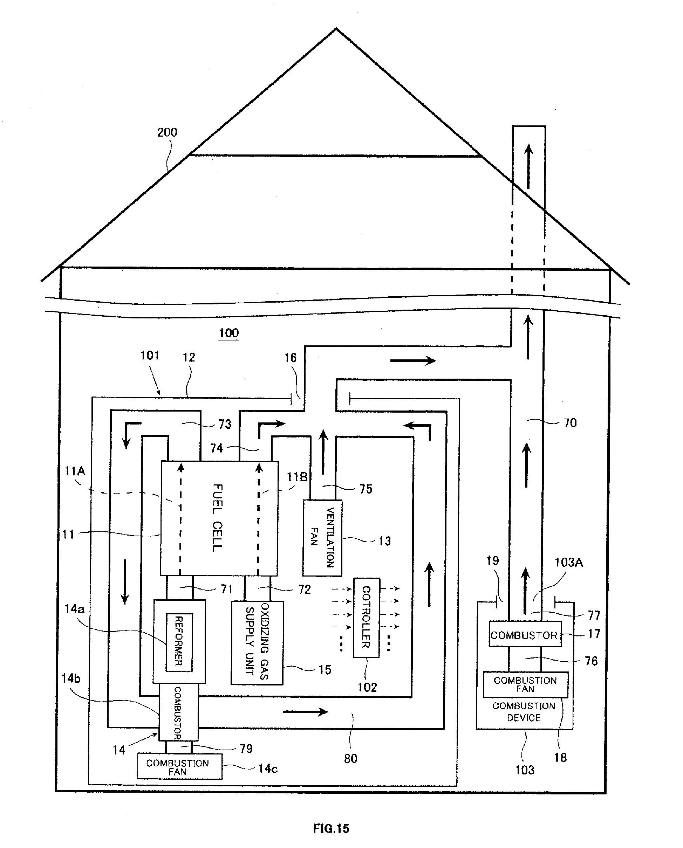

Fig. 15 is a schematic diagram showing the schematic configuration of the power generation system according to Embodiment 3 of the present invention.

As shown in Fig. 15, the power generation system 100 according to Embodiment 3 of the present invention is the same in basic configuration as the power generation system 100 according to Embodiment 1 but is different from the power generation system 100 according to Embodiment 1 in that: the fuel gas supply unit 14 is constituted by a hydrogen generator 14; and the off fuel gas passage 73 is connected to the combustor 14b of the hydrogen generator 14. Specifically, the hydrogen generator 14 includes the reformer 14a and the combustor 14b.

The downstream end of the off fuel gas passage 73 is connected to the combustor 14b. The off fuel gas flows from the fuel cell 11 through the off fuel gas passage 73 to be supplied to the combustor 14b as the combustion fuel. A combustion fan 14c is connected to the combustor 14b through an air supply passage 79. The combustion fan 14c may have any configuration as long as it can supply the combustion air to the combustor 14b. For example, the combustion fan 14c may be constituted by a fan, a blower, or the like.

The combustor 14b combusts the supplied off fuel gas and combustion air to generate the flue gas and heat. The flue gas generated in the combustor 14b heats the reformer 14a and the like, and then, is discharged to a flue gas passage 80. The flue gas discharged to the flue gas passage 80 flows through the flue gas passage 80 to be discharged to the discharge passage 70. The flue gas discharged to the discharge passage 70 flows through the discharge passage 70 to be discharged to the outside of the power generation system 100 (the building 200).

A raw material supply unit and a steam supply unit (both not shown) are connected to the reformer 14a, and the raw material and the steam are supplied to the reformer 14a. Examples of the raw material are a natural gas containing methane as a major component and a LP gas.

The reformer 14a includes a reforming catalyst. The reforming catalyst may be any material as long as, for example, it can serve as a catalyst in a steam-reforming reaction by which the hydrogen-containing gas is generated from the raw material and the steam. Examples of the reforming catalyst are a ruthenium-based catalyst in which a catalyst carrier, such as alumina, supports ruthenium (Ru) and a nickel-based catalyst in which the same catalyst carrier as above supports nickel (Ni).

In the reformer 14a, the hydrogen-containing gas is generated by the reforming reaction between the supplied raw material and steam. The generated hydrogen-containing gas flows as the fuel gas through the fuel gas supply passage 71 to be supplied to the fuel gas channel 11A of the fuel cell 11.

Embodiment 3 is configured such that the hydrogen-containing gas generated in the reformer 14a is supplied as the fuel gas to the fuel cell 11. However, the present embodiment is not limited to this. Embodiment 3 may be configured such that the hydrogen-containing gas flowed through a shift converter or carbon monoxide remover provided in the hydrogen generator 14 is supplied to the fuel cell 11, the shift converter including a shift catalyst (such as a copper-zinc-based catalyst) for reducing carbon monoxide in the hydrogen-containing gas supplied from the reformer 14a, the carbon monoxide remover including an oxidation catalyst (such as a ruthenium-based catalyst) or a methanation catalyst (such as a ruthenium-based catalyst).

The power generation system 100 according to Embodiment 3 configured as above also has the same operational advantages as the power generation system 100 according to Embodiment 1.

In Embodiments 1 to 3 (including Modification Examples), the ventilation fan 13 is used as a ventilator. However, these embodiments are not limited to this. For example, the oxidizing gas supply unit 15 may be used instead of the ventilation fan 13. In this case, for example, a passage (hereinafter referred to as a "first connection passage") connecting one of the oxidizing gas supply unit 15 and the oxidizing gas supply passage 72 and one of the off oxidizing gas passage 74 and the discharge passage 70 may be formed, and the controller 102 may cause the oxidizing gas supply unit 15 to operate when the fuel cell system 101 is in the power generation stop state and the combustion device 103 is operating.

In a case where the fuel gas supply unit 14 is constituted by a hydrogen generator and the hydrogen generator includes the combustor 14b and the combustion fan 14c, the combustion fan 14c may be used as a ventilator instead of the ventilation fan 13. The controller 102 may cause the combustion fan 14c to operate when the fuel cell system 101 is in the power generation stop state and the combustion device 103 is operating.

Further, as a ventilator, the ventilation fan 13 and the oxidizing gas supply unit 15 may be used at the same time, the ventilation fan 13 and the combustion fan 14c may be used at the same time, the combustion fan 14c and the oxidizing gas supply unit 15 may be used at the same time, or the ventilation fan 13, the combustion fan 14c, and the oxidizing gas supply unit 15 may be used at the same time.

From the foregoing explanation, many modifications and other embodiments of the present invention are obvious to one skilled in the art. Therefore, the foregoing explanation should be interpreted only as an example and is provided for the purpose of teaching the best mode for carrying out the present invention to one skilled in the art. The structures and/or functional details may be substantially modified within the scope of the present invention. In addition, various inventions can be made by suitable combinations of a plurality of components disclosed in the above embodiments.

### Industrial Applicability

According to the power generation system of the present invention and the method of operating the power generation system, the power generation of the fuel cell can be stably performed, and the durability of the power generation system can be improved. Therefore, the power generation system of the present invention and the method of operating the power generation system are useful in the field of fuel cells.

### Reference Signs List

- 11: fuel cell
- 11A: fuel gas channel
- 11B: oxidizing gas channel
- 12: case
- 13: ventilation fan
- 14: fuel gas supply unit
- 14a: reformer
- 14b: combustor
- 15: oxidizing gas supply unit
- 16: air supply port
- 17: combustor
- 18: combustion fan
- 19: air supply port
- 20: first temperature detector
- 21: pressure detector
- 22: second temperature detector
- 23: flow rate detector
- 70: discharge passage
- 71: fuel gas supply passage
- 72: oxidizing gas supply passage
- 73: off fuel gas passage
- 74: off oxidizing gas passage
- 75: ventilation passage
- 76: combustion air supply passage
- 77: exhaust gas passage
- 78: air intake passage
- 79: air supply passage
- 80: flue gas passage
- 100: power generation system
- 101: fuel cell system
- 102: controller
- 103: combustion device
- 103A: exhaust port
- 200: building

## Claims

1. A power generation system comprising:
a fuel cell system including a fuel cell configured to generate electric power using a fuel gas and an oxidizing gas and a case configured to house the fuel cell;
a ventilator;
a controller;
a combustion device; and
a discharge passage formed to cause the case and an exhaust port of the combustion device to communicate with each other and configured to discharge an exhaust gas from the fuel cell system and an exhaust gas from the combustion device to an atmosphere through an opening of the discharge passage, the opening being open to the atmosphere, wherein:
the ventilator is configured to discharge a gas in the case to the discharge passage to ventilate an inside of the case; and
the controller causes the ventilator to operate when the fuel cell system is in a power generation stop state and the combustion device is operating.

2. The power generation system according to claim 1, wherein the controller causes the ventilator to operate in a case where the combustion device is activated when the fuel cell system is in the power generation stop state.

3. The power generation system according to claim 1, wherein the controller causes the ventilator to operate when an activation command of the combustion device is input to the controller.

4. The power generation system according to claim 2 or 3, wherein the controller causes the ventilator to start operating and then causes the combustion device to start operating.

5. The power generation system according to claim 1, wherein the controller causes the ventilator to operate in a case where discharging of the exhaust gas from the combustion device is detected when the fuel cell system is in the power generation stop state.

6. The power generation system according to claim 5, further comprising
a first temperature detector provided at least one of on the discharge passage and in the case, wherein
the controller causes the ventilator to operate when a temperature detected by the first temperature detector is higher than a first temperature.

7. The power generation system according to any one of claims 1 to 3, further comprising:
an air intake passage provided at an air supply port of the case and configured to supply air to the fuel cell system through an opening of the air intake passage, the opening being open to the atmosphere; and
a first temperature detector provided at least one of on the air intake passage, on the discharge passage, and in the case, wherein
the controller causes the ventilator to operate when a difference between temperatures detected by the first temperature detector before and after a predetermined time is increased by a predetermined temperature width.

8. The power generation system according to claim 5, further comprising
a pressure detector configured to detect pressure in the discharge passage, wherein
the controller causes the ventilator to operate when the pressure detected by the pressure detector is higher than first pressure.

9. The power generation system according to claim 5, further comprising
a flow rate detector configured to detect a flow rate of a gas flowing through the discharge passage, wherein
the controller causes the ventilator to operate when the flow rate detected by the flow rate detector is higher than a first flow rate.

10. The power generation system according to claim 1, wherein:
the combustion device includes a combustion air supply unit configured to supply combustion air; and
the controller controls the ventilator such that static pressure of the ventilator becomes higher than discharge pressure of the combustion air supply unit.

11. The power generation system according to claim 1, further comprising
an air intake passage formed to cause the case and an air supply port of the combustion device to communicate with each other and configured to supply air to the fuel cell system and the combustion device through an opening of the air intake passage, the opening being open to the atmosphere, wherein
the air intake passage is formed so as to be heat-exchangeable with the exhaust passage.

12. The power generation system according to claim 11, further comprising
a second temperature detector provided on the air intake passage, wherein
the controller causes the ventilator to operate when a temperature detected by the second temperature detector is higher than a second temperature.

13. The power generation system according to claim 11, further comprising
a second temperature detector provided on the air intake passage, wherein
the controller causes the ventilator to operate when a difference between temperatures detected by the second temperature detector before and after a predetermined time is lower than a predetermined temperature width.

14. The power generation system according to any one of claims 1 to 13, wherein the fuel cell system further includes a hydrogen generator including a reformer configured to generate a hydrogen-containing gas from a raw material and steam.

15. A method of operating a power generation system,
the power generation system comprising:
a fuel cell system including a fuel cell configured to generate electric power using a fuel gas and an oxidizing gas, a case configured to house the fuel cell, and a ventilator;
a combustion device; and
a discharge passage formed to cause the case and an exhaust port of the combustion device to communicate with each other and configured to discharge an exhaust gas from the fuel cell system and an exhaust gas from the combustion device to an atmosphere through an opening of the discharge passage, the opening being open to the atmosphere, wherein
the ventilator is configured to discharge a gas in the case to the discharge passage to ventilate an inside of the case and is configured to generate predetermined pressure or higher when the fuel cell system is in a power generation stop state and the combustion device is operating.

## Patentansprüche

1. Energieerzeugungssystem, das umfasst:
ein Brennstoffzellen-System, das eine Brennstoffzelle, die so eingerichtet ist, dass sie Elektroenergie unter Verwendung eines Brennstoffgases und eines oxidierenden Gases erzeugt, sowie ein Gehäuse enthält, das so eingerichtet ist, dass es die Brennstoffzelle aufnimmt;
ein Gebläse;
eine Steuereinrichtung;
eine Verbrennungsvorrichtung; und
einen Ableitkanal, der so ausgebildet ist, dass er bewirkt, dass das Gehäuse und ein Abgasanschluss der Verbrennungsvorrichtung in Verbindung miteinander stehen, und so eingerichtet ist, dass er ein Abgas von dem Brennstoffzellen-System und ein Abgas von der Verbrennungsvorrichtung über eine Öffnung des Ableitkanals an eine Atmosphäre ableitet, wobei die Öffnung zu der Atmosphäre hin offen ist, und
das Gebläse so eingerichtet ist, dass es ein Gas in dem Gehäuse zu dem Ableitkanal ableitet, um einen Innenraum des Gehäuses zu belüften; und
die Steuereinrichtung bewirkt, dass das Gebläse arbeitet, wenn sich das Brennstoffzellen-System in einem Zustand befindet, in dem Energieerzeugung unterbrochen ist, und die Verbrennungsvorrichtung arbeitet.

2. Energieerzeugungssystem nach Anspruch 1, wobei die Steuereinrichtung bewirkt, dass das Gebläse arbeitet, wenn die Verbrennungsvorrichtung aktiviert ist und sich das Brennstoffzellen-System in dem Zustand befindet, in dem Energieerzeugung unterbrochen ist.

3. Energieerzeugungssystem nach Anspruch 1, wobei die Steuereinrichtung bewirkt, dass das Gebläse arbeitet, wenn ein Befehl zum Aktivieren der Verbrennungsvorrichtung in die Steuereinrichtung eingegeben wird.

4. Energieerzeugungssystem nach Anspruch 2 oder 3, wobei die Steuereinrichtung bewirkt, dass das Gebläse zu arbeiten beginnt, und dann bewirkt, dass die Verbrennungsvorrichtung zu arbeiten beginnt.

5. Energieerzeugungssystem nach Anspruch 1, wobei die Steuereinrichtung bewirkt, dass das Gebläse arbeitet, wenn erfasst wird, dass das Abgas aus der Verbrennungsvorrichtung abgeleitet wird, und sich das Brennstoffzellen-System in dem Zustand befindet, in dem Energieerzeugung unterbrochen ist.

6. Energieerzeugungssystem nach Anspruch 5, das des Weiteren umfasst:
eine erste Temperatur-Erfassungseinrichtung, die in dem Ableitkanal oder/und in dem Gehäuse vorhanden ist, wobei
die Steuereinrichtung veranlasst, dass das Gebläse arbeitet, wenn eine durch die erste Temperatur-Erfassungseinrichtung erfasste Temperatur höher ist als eine erste Temperatur.

7. Energieerzeugungssystem, nach einem der Ansprüche 1 bis 3, das des Weiteren umfasst:
einen Luftansaugkanal, der an einem Luftzuführanschluss des Gehäuses vorhanden und
so eingerichtet ist, dass er dem Brennstoffzellen-System über eine Öffnung des Luftansaugkanals Luft zuführt, wobei die Öffnung zu der Atmosphäre hin offen ist; und
eine erste Temperatur-Erfassungseinrichtung, die an dem Luftansaugkanal, an dem Ableitkanal oder/und in dem Gehäuse vorhanden ist, wobei
die Steuereinrichtung bewirkt, dass das Gebläse arbeitet, wenn eine Differenz zwischen Temperaturen, die durch die erste Temperatur-Erfassungseinrichtung vor und nach einer vorgegebenen Zeit erfasst werden, um eine vorgegebenen Temperatur-Breite vergrößert ist.

8. Energieerzeugungssystem nach Anspruch 5, das des Weiteren umfasst:
eine Druck-Erfassungseinrichtung, die so eingerichtet ist, dass sie Druck in dem Ableitkanal erfasst, wobei
die Steuereinrichtung bewirkt, dass das Gebläse arbeitet, wenn der durch die Druck-Erfassungseinrichtung erfasste Druck höher ist als ein erster Druck.

9. Energieerzeugungssystem nach Anspruch 5, das des Weiteren umfasst:
eine Strömungsgeschwindigkeits-Erfassungseinrichtung, die so eingerichtet ist, dass sie eine Strömungsgeschwindigkeit eines durch den Ableitkanal strömenden Gases erfasst, wobei
die Steuereinrichtung bewirkt, dass das Gebläse arbeitet, wenn die durch die Strömungsgeschwindigkeits-Erfassungseinrichtung erfasste Strömungsgeschwindigkeit höher ist als eine erste Strömungsgeschwindigkeit.

10. Energieerzeugungssystem nach Anspruch 1, wobei:
die Verbrennungsvorrichtung eine Verbrennungsluft-Zuführeinheit enthält, die so eingerichtet ist, dass sie Verbrennungsluft zuführt; und
die Steuereinrichtung das Gebläse so steuert, dass statischer Druck des Gebläses höher ist als Förderdruck der Verbrennungsluft-Zuführeinheit.

11. Energieerzeugungssystem nach Anspruch 1, das des Weiteren umfasst:
einen Luftansaugkanal, der so ausgebildet ist, dass er bewirkt, dass das Gehäuse und ein Luftzuführanschluss der Verbrennungsvorrichtung in Verbindung miteinander stehen, und
so eingerichtet ist, dass er dem Brennstoffzellen-System und der Verbrennungsvorrichtung über eine Öffnung des Luftansaugkanals Luft zuführt, wobei die Öffnung zu der Atmosphäre hin offen ist, und
der Luftansaugkanal so ausgebildet ist, dass Wärmeaustausch zwischen ihm und dem Abgaskanal möglich ist.

12. Energieerzeugungssystem nach Anspruch 11, das des Weiteren umfasst:
eine zweite Temperatur-Erfassungseinrichtung, die an dem Luftansaugkanal vorhanden ist, wobei
die Steuereinrichtung bewirkt, dass das Gebläse arbeitet, wenn eine durch die zweite Temperatur-Erfassungseinrichtung erfasste Temperatur höher ist als eine zweite Temperatur.

13. Stromerzeugungssystem nach Anspruch 11, das des Weiteren umfasst:
eine zweite Temperatur-Erfassungseinrichtung, die an dem Luftansaugkanal vorhanden ist, wobei
die Steuereinrichtung bewirkt, dass das Gebläse arbeitet, wenn eine Differenz zwischen Temperaturen, die durch die zweite Temperatur-Erfassungseinrichtung vor und nach einer vorgegebenen Zeit erfasst werden, kleiner ist als eine vorgegebene Temperatur-Breite.

14. Energieerzeugungssystem, nach einem der Ansprüche 1 bis 13, wobei das Brennstoffzellensystem des Weiteren eine Wasserstoff-Erzeugungseinrichtung enthält, die einen
Reformer enthält, der so eingerichtet ist, dass er ein wasserstoffhaltiges Gas aus einem Ausgangsmaterial und Dampf erzeugt.

15. Verfahren zum Betreiben eines Energieerzeugungssystems,
wobei das Energieerzeugungssystem umfasst:
ein Brennstoffzellen-System, das eine Brennstoffzelle, die so eingerichtet ist, dass sie Elektroenergie unter Verwendung eines Brennstoffgases und eines oxidierenden Gases erzeugt, ein Gehäuse, das so eingerichtet ist, dass es die Brennstoffzelle aufnimmt, und ein Gebläse enthält;
eine Verbrennungsvorrichtung; und
einen Ableitkanal, der so ausgebildet ist, dass er bewirkt, dass das Gehäuse und ein Abgasanschluss der Verbrennungsvorrichtung in Verbindung miteinander stehen, und so eingerichtet ist, dass er ein Abgas von dem Brennstoffzellen-System und ein Abgas von der Verbrennungsvorrichtung über eine Öffnung des Ableitkanals an eine Atmosphäre ableitet, wobei die Öffnung zu der Atmosphäre hin offen ist, und
das Gebläse so eingerichtet ist, dass es ein Gas in dem Gehäuse zu dem Ableitkanal ableitet, um einen Innenraum des Gehäuses zu belüften; und so eingerichtet ist, dass es vorgegebenen oder höheren Druck erzeugt, wenn sich das Brennstoffzellen-System in einem Zustand befindet, in dem Energieerzeugung unterbrochen ist, und die Verbrennungsvorrichtung arbeitet.

## Revendications

1. Système de génération d'énergie, comprenant :
- un système de pile à combustible incluant une pile à combustible configurée pour générer de l'énergie électrique en utilisant un gaz combustible et un gaz oxydant et une enveloppe configurée pour loger la pile à combustible ;
- une soufflante ;
- un dispositif de commande ;
- un dispositif de combustion ; et
- un passage de décharge ménagé pour faire en sorte que l'enveloppe et un port d'échappement du dispositif de combustion communiquent l'une avec l'autre et configuré pour décharger un gaz d'échappement du système de pile à combustible et un gaz d'échappement du dispositif de combustion vers une atmosphère par une ouverture du passage de décharge, l'ouverture étant ouverte vers l'atmosphère, dans lequel :
- la soufflante est configurée pour décharger un gaz d'un intérieur de l'enveloppe au passage de décharge afin de ventiler l'intérieur de l'enveloppe ; et
- le dispositif de commande fait en sorte que la soufflante opère lorsque le système de pile à combustible est dans un état d'arrêt de génération d'énergie et que le dispositif de combustion est en cours d'opération.

2. Système de génération d'énergie selon la revendication 1, dans lequel le dispositif de commande fait en sorte que la soufflante opère, au cas où le dispositif de combustion serait activé lorsque le système de pile à combustible est dans l'état d'arrêt de génération d'énergie.

3. Système de génération d'énergie selon la revendication 1, dans lequel le dispositif de commande fait en sorte que la soufflante opère lorsqu'une instruction d'activation du dispositif de combustion est reçue en entrée du dispositif de commande.

4. Système de génération d'énergie selon les revendications 2 ou 3, dans lequel le dispositif de commande fait en sorte que la soufflante commence à opérer, puis que le dispositif de combustion commence à opérer.

5. Système de génération d'énergie selon la revendication 1, dans lequel le dispositif de commande fait en sorte que la soufflante opère au cas où une décharge du gaz d'échappement du dispositif de combustion serait détectée lorsque le système de pile à combustible est dans l'état d'arrêt de génération d'énergie.

6. Système de génération d'énergie selon la revendication 5, comprenant en outre :
- un premier détecteur de température prévu au niveau d'au moins un emplacement parmi sur le passage de décharge et dans l'enveloppe, dans lequel,
- le dispositif de commande fait en sorte que la soufflante opère lorsqu'une température détectée par le premier détecteur de température est plus élevée qu'une première température.

7. Système de génération d'énergie selon l'une quelconque des revendications 1 à 3, comprenant en outre
- un passage d'admission d'air ménagé au niveau d'un port d'alimentation en air de l'enveloppe et configuré pour alimenter en air le système de pile à combustible par une ouverture du passage d'admission d'air, l'ouverture étant ouverte vers l'atmosphère ; et
- un premier détecteur de température prévu au niveau d'au moins un emplacement parmi sur le passage d'admission d'air, sur le passage de décharge et dans l'enveloppe, dans lequel,
- le dispositif de commande fait en sorte que la soufflante opère lorsqu'une différence entre des températures détectées par le premier détecteur de température avant et après un temps prédéterminé est accrue d'un écart de température prédéterminé.

8. Système de génération d'énergie selon la revendication 5, comprenant en outre :
- un détecteur de pression configuré pour détecter une pression dans le passage de décharge, dans lequel,
- le dispositif de commande fait en sorte que la soufflante opère lorsque la pression détectée par le détecteur de pression est plus élevée qu'une première pression.

9. Système de génération d'énergie selon la revendication 5, comprenant en outre :
- un détecteur de débit configuré pour détecter un débit d'un gaz traversant le passage de décharge, dans lequel,
- le dispositif de commande fait en sorte que la soufflante opère lorsque le débit détecté par le détecteur de débit est plus élevé qu'un premier débit.

10. Système de génération d'énergie selon la revendication 1, dans lequel :
- le dispositif de combustion inclut une unité d'alimentation en air de combustion configurée pour délivrer de l'air de combustion ; et
- le dispositif de commande réalise une commande de la soufflante de sorte qu'une pression statique de la soufflante devienne plus élevée qu'une pression de décharge de l'unité d'alimentation en air de combustion.

11. Système de génération d'énergie selon la revendication 1, comprenant en outre :
- un passage d'admission d'air ménagé de façon à faire en sorte que l'enveloppe et le port d'alimentation en air du dispositif de combustion communiquent l'une avec l'autre et configuré pour alimenter en air le système de pile à combustible et le dispositif de combustion par une ouverture du passage d'admission d'air, l'ouverture étant ouverte vers l'atmosphère, dans lequel,
- le passage d'admission d'air est ménagé de façon à être susceptible d'échanger de la chaleur avec le passage d'échappement.

12. Système de génération d'énergie selon la revendication 11, comprenant en outre :
- un second détecteur de température prévu sur le passage d'admission d'air, dans lequel,
- le dispositif de commande fait en sorte que la soufflante opère lorsqu'une température détectée par le second détecteur de température est plus élevée qu'une seconde température.

13. Système de génération d'énergie selon la revendication 11, comprenant en outre :
- un second détecteur de température prévu sur le passage d'admission d'air, dans lequel,
- le dispositif de commande fait en sorte que la soufflante opère lorsqu'une différence entre des températures détectées par le second détecteur de température avant et après un temps prédéterminé est inférieure à un écart de température prédéterminé.

14. Système de génération d'énergie selon l'une quelconque des revendications 1 à 13, dans lequel le système de pile à combustible inclut en outre un générateur d'hydrogène incluant une unité de reformage configurée pour générer un gaz contenant de l'hydrogène à partir d'une substance brute et de vapeur.

15. Procédé d'opération d'un système de génération d'énergie,
- le système de génération d'énergie comprenant :
- un système de pile à combustible incluant une pile à combustible configurée pour générer de l'énergie électrique en utilisant un gaz combustible et un gaz oxydant, une enveloppe configurée pour loger la pile à combustible et une soufflante ;
- un dispositif de combustion ; et
- un passage de décharge ménagé pour faire en sorte que l'enveloppe et un port d'échappement du dispositif de combustion communiquent l'une avec l'autre et configuré pour décharger un gaz d'échappement du système de pile à combustible et un gaz d'échappement du dispositif de combustion vers une atmosphère par une ouverture du passage de décharge, l'ouverture étant ouverte vers l'atmosphère, dans lequel :
- la soufflante est configurée pour décharger un gaz d'un intérieur de l'enveloppe au passage de décharge afin de ventiler l'intérieur de l'enveloppe et est configurée pour générer une pression prédétermiriée ou plus élevée lorsque le système de pile à combustible est dans un état d'arrêt de génération d'énergie et que le dispositif de combustion est en cours d'opération.
